# EUROPEAN PATENT APPLICATION

(11) **EP 4 770 211 A1**
(43) Date of publication of application: **01.07.2026**
(21) Application number: 24926443.3
(22) Date of filing: 29.02.2024
(51) Int. Cl.: H04W 52/02, G06F 1/26

(54) **CONTROL METHOD AND APPARATUS FOR ELECTRONIC DEVICE**

(71) Applicant: Honor Device Co., Ltd., Shenzhen, Guangdong 518040 (CN)
(72) Inventor: LV, Jianming, Shenzhen, Guangdong 518040 (CN); HUANG, Libo, Shenzhen, Guangdong 518040 (CN)
(74) Representative: Isarpatent
(86) International application number: PCT/CN2024/079467
(87) International publication number: WO 2025/179564

(57) **Abstract**

Embodiments of this application provide a control method and apparatus for an electronic device, and relate to the field of terminal technologies. The method includes: receiving a second operation of a user at a second moment, where the second operation is an operation of enabling an AON service; in response to the second operation, powering on a second interface in an AON camera by using a first PMIC, where the second moment is after the first moment; and powering on a third interface in the AON camera at a third moment. In this way, the electronic device may supply power to the AON camera by using the first PMIC instead of a specific power management chip, so that applicability of performing power management on the AON camera is improved, and costs are reduced. In addition, in this solution, flexible power management may be performed based on an actual requirement for the AON service. For example, the electronic device may separately power on the second interface and the third interface when enabling the AON service.

## Description

### TECHNICAL FIELD

This application relates to the field of terminal technologies, and in particular, to a control method and apparatus for an electronic device.

### BACKGROUND

With development of technologies, electronic devices such as a mobile phone have increasingly more functions. For example, a smart electronic device such as a mobile phone may implement an always-on (always-on, AON) service by using an AON camera. For example, the AON service is a "keep screen on while looking" service. An AON camera in an always-on state may capture an image in real time, and detect, through image recognition, whether a user is looking at the screen. When the electronic device detects that the user is looking at the screen, the electronic device controls the screen to keep in an always-on state, or when the electronic device detects that the user is not looking at the screen, the electronic device controls to decrease screen brightness. While the screen brightness is decreased and the screen of the electronic device is not locked, when the electronic device detects that the user gazes at the screen again, the electronic device may control to increase the screen brightness.

In a scenario in which the AON camera is used to execute the AON service, the AON camera needs to perform power supply management by using a specific power management chip, to ensure normal running of the AON camera. However, the foregoing control method for the electronic device features relatively low applicability.

### SUMMARY

Embodiments of this application provide a control method and apparatus for an electronic device, which are applied to the field of terminal technologies. A first PMIC may be used instead of a specific power management chip to supply power to an AON camera, thereby improving applicability of performing power management on the AON camera.

According to a first aspect, an embodiment of this application provides a control method for an electronic device, which is applied to the electronic device, where the electronic device includes an always-on AON camera and a first power management integrated circuit PMIC, and the method includes: receiving a first operation of a user at a first moment, where the first operation is a startup operation; in response to the first operation, powering on a first interface in the AON camera by using the first PMIC; receiving a second operation of the user at a second moment, where the second operation is an operation of enabling an AON service; in response to the second operation, powering on a second interface in the AON camera by using the first PMIC, where the second moment is after the first moment; and powering on a third interface in the AON camera at a third moment, where the third moment is after the second moment, and the first interface includes the second interface and the third interface.

In this way, this embodiment of this application provides a control method for an electronic device. The first PMIC may be used instead of a specific power management chip to supply power to the AON camera, so that applicability of performing power management on the AON camera is improved, and costs are reduced. In addition, in this solution, flexible power management may be performed on the AON camera based on an actual requirement for the AON service. For example, the electronic device may separately power on the second interface and the third interface when enabling the AON service.

In a possible implementation, power-on duration of the first interface is first duration, power-on of the third interface is completed at a fourth moment, the fourth moment is after the third moment, duration between the second moment and the fourth moment is second duration, and the second duration is longer than the first duration.

In a possible implementation, the powering on a second interface in the AON camera by using the first PMIC includes: on an application processor AP side, powering on the second interface by using the first PMIC, where the second interface is a power interface in the AON camera; and the powering on a third interface in the AON camera includes: on a sensor hub sensor hub side, powering on the third interface, where the third interface is an interface configured to perform signal control on the AON camera.

In this way, on the AP side, the electronic device supplies power to the second interface in the AON camera by using the first PMIC, so that a power supply process is not affected by a specific power management chip, and applicability of this solution is improved. In addition, on the sensor hub side, power is supplied to the third interface in the AON camera, so that a sensor hub can perform low-power-consumption control on the AON camera by using the third interface.

In a possible implementation, the electronic device includes an AON application, a smart sensing service module, and a first camera driver, and after the responding to the second operation, the method further includes: the AON application sends a subscription message to the smart sensing service module, where the subscription message is used to subscribe to the AON service; and the smart sensing service module sends a first message to the first camera driver in response to the subscription message, where the first message is used to indicate to power on the AON camera.

In this way, when detecting the subscription message, the smart sensing service module in the electronic device may indicate, by using the first message, the first camera driver to supply power to the AON camera in a timely manner, thereby reducing an exception situation of the AON service.

In a possible implementation, the AP side of the electronic device includes the first camera driver, a regulator framework, and the first PMIC driver; the powering on the second interface by using the first PMIC includes: the first camera driver obtains the second interface from a device tree in response to the first message; the first camera driver sends a second message to the first PMIC driver along the regulator framework; and the first PMIC driver powers on the second interface in response to the second message; and the method further includes: when power-on of the second interface is completed, the first PMIC driver sends a first response message to the smart sensing service module along the first camera driver.

In this way, the first camera driver, the regulator framework, and the first PMIC driver that are located on the AP side can jointly implement power-on of the second interface. The regulator framework and the first PMIC driver may be disposed in an AP power driver.

In a possible implementation, the sensor hub side includes an AON image signal processor ISP; and the method further includes: the smart sensing service module sends the subscription message to the AON ISP in response to the first response message; and the AON ISP obtains the third interface from a first configuration file in response to the subscription message; and the powering on the third interface includes: the AON ISP powers on the third interface.

In this way, the electronic device may also complete power-on of some interfaces on the sensor hub side. Because the first PMIC driver is not limited to any specific power management chip, a power supply management process may be flexibly set based on a service requirement.

In a possible implementation, the AON ISP receives a third message when the sensor hub detects that the electronic device is in a sleep state, where the third message includes a message used to indicate to cause the AON camera to enter the sleep state; and the AON ISP powers off the third interface in response to the third message.

In this way, the sensor hub may obtain and calculate sensor data. Therefore, when the sensor hub detects, based on the sensor data, that the sensor hub needs to sleep, the sensor hub may send the third message to the AON ISP, so that the AON ISP may power off an interface 2 to reduce power consumption.

In a possible implementation, before the second moment, the method further includes: powering off the first interface at a fifth moment by using the first PMIC; and after the third moment, the method further includes: receiving a third operation of the user at a sixth moment, where the third operation is an operation of disabling the AON service; in response to the third operation, powering off the second interface by using the first PMIC; and powering off the third interface at a seventh moment, where the seventh moment is after the sixth moment.

In this way, in this solution, flexible power management may be performed on the AON camera based on an actual requirement for the AON service. For example, the electronic device may separately power off the second interface and the third interface when disabling the AON service.

In a possible implementation, power-off duration of the first interface is third duration, power-off of the third interface is completed at an eighth moment, the eighth moment is after the seventh moment, duration between the sixth moment and the eighth moment is fourth duration, and the fourth duration is longer than the third duration.

In a possible implementation, the second interface includes one or more of the following: an input/output voltage IOVDD interface, a digital voltage DVDD interface, or an analog voltage AVDD interface, and the third interface includes a reset signal RESET interface and/or a master clock signal MCLK interface.

According to a second aspect, an embodiment of this application provides another control method for an electronic device, which is applied to the electronic device, where the electronic device includes an AON camera and a first PMIC, and the method includes: receiving a second operation of a user, where the second operation is an operation of enabling an AON service; in response to the second operation, recording, as a first parameter, a quantity of times of using the AON camera, and powering on a first interface in the AON camera by using the first PMIC; receiving a fourth operation of the user, where the fourth operation includes an operation of using the AON camera in a first service, the first service is different from the AON service, and the fourth operation is performed after the second operation; and in response to the fourth operation, recording, as a second parameter, the quantity of times of using the AON camera.

In this way, because the AON camera may indicate at least two AON services at the same time, the electronic device may provide a solution in which the AON camera is used by a plurality of services. For example, the electronic device may determine, by recording the quantity of times of using the AON camera, whether to disable the AON camera when disabling the AON service.

In a possible implementation, after power-on of the first interface is completed, the method further includes: receiving a fifth operation of the user, where the fifth operation is an operation of disabling the AON service, and the fifth operation is performed after the fourth operation; and in response to the fifth operation, recording, as the first parameter, the quantity of times of using the AON camera, and not powering off the first interface when the first parameter is not equal to a first threshold.

In this way, the electronic device may determine, based on a comparison between the first parameter and the first threshold, that another service is currently using the AON camera, and therefore does not power off the AON camera.

In a possible implementation, after power-on of the first interface is completed, the method further includes: receiving a sixth operation of the user, where the sixth operation is an operation of disabling the first service, and the sixth operation is performed after the fourth operation; in response to the sixth operation, recording, as the first parameter, the quantity of times of using the AON camera, and not powering off the first interface when the second parameter is not equal to a first threshold; receiving a seventh operation of the user, where the seventh operation is an operation of disabling the AON service, and the seventh operation is performed after the sixth operation; and in response to the seventh operation, recording, as a third parameter, the quantity of times of using the AON camera, and powering off the first interface when the third parameter is equal to the first threshold.

In this way, when the electronic device disables the first service before disabling the AON service, the electronic device may determine, based on a comparison between the third parameter and the first threshold, that currently only the AON service is using the AON camera, and therefore may directly power off the AON camera.

In a possible implementation, a sensor hub of the electronic device includes an AON ISP, a camera power supply management module, and a second PMIC driver, and the recording, as a first parameter, a quantity of times of using the AON camera, and powering on a first interface in the AON camera by using the first PMIC includes: the AON ISP obtains the first interface from a second configuration file; the AON ISP sends a fourth message to the second PMIC driver along the camera power supply management module; in response to the fourth message, the camera power supply management module records, as the first parameter, the quantity of times of using the AON camera; and the second PMIC driver powers on the first interface in response to the fourth message.

In this way, the electronic device may control power-on of the first interface on the sensor hub side. In addition, the camera power supply management module is added on the sensor hub side, so that the sensor hub can record the quantity of times of using the AON camera, and maintain a conflict scenario in which the AON camera is used by a plurality of services.

In a possible implementation, the first interface includes one or more of the following: an input/output voltage IOVDD interface, a digital voltage DVDD interface, an analog voltage AVDD interface, a reset signal RESET interface, or a master clock signal MCLK interface.

According to a third aspect, an embodiment of this application provides a control apparatus for an electronic device. The control apparatus for an electronic device may be an electronic device, or may be a chip or a chip system in an electronic device. The control apparatus for an electronic device may include a receiving unit and a processing unit. The processing unit is configured to perform a processing step in the control apparatus for an electronic device, and the receiving unit is configured to perform a receiving step in operations of the control apparatus for an electronic device. When the control apparatus for an electronic device is an electronic device, the processing unit may be a processor. The control apparatus for an electronic device may further include a storage unit, and the storage unit may be a memory. The storage unit is configured to store instructions, and the processing unit executes the instructions stored in the storage unit, so that the electronic device is enabled to implement the control method for an electronic device described in the first aspect or any possible implementation of the first aspect. When the control apparatus for an electronic device is a chip or a chip system in an electronic device, the processing unit may be a processor. The processing unit executes instructions stored in the storage unit, so that the electronic device is enabled to implement the control method for an electronic device described in the first aspect or any possible implementation of the first aspect. The storage unit may be a storage unit (for example, a register or a cache) in the chip or a storage unit (for example, a read-only memory or a random access memory) that is in the electronic device and that is located outside the chip.

Specifically, at a first moment, the receiving unit is configured to receive a first operation of a user, where the first operation is a startup operation; in response to the first operation, the processing unit is configured to power on a first interface in an AON camera by using a first PMIC; at a second moment, the receiving unit is further configured to receive a second operation of the user, where the second operation is an operation of enabling the AON service; in response to the second operation, the processing unit is further configured to power on a second interface in the AON camera by using the first PMIC, where the second moment is after the first moment; and at a third moment, the processing unit is further configured to power on a third interface in the AON camera, where the third moment is after the second moment, and the first interface includes the second interface and the third interface.

According to a fourth aspect, an embodiment of this application provides an electronic device. The electronic device includes one or more processors and a memory. The memory is coupled to the one or more processors, the memory is configured to store computer program code, the computer program code includes computer instructions, and the one or more processors invoke the computer instructions to enable the electronic device to perform the method described in the first aspect or any possible implementation of the first aspect, or the method described in the second aspect or any possible implementation of the second aspect.

According to a fifth aspect, an embodiment of this application provides a computer-readable storage medium. The computer-readable storage medium includes computer instructions. When the computer instructions are run on an electronic device, the electronic device is enabled to perform the method described in the first aspect or any possible implementation of the first aspect, or the method described in the second aspect or any possible implementation of the second aspect.

According to a sixth aspect, an embodiment of this application provides a computer program product including a computer program. The computer program product includes computer program code. When the computer program code is run on an electronic device, the electronic device is enabled to perform the method described in the first aspect or any possible implementation of the first aspect, or the method described in the second aspect or any possible implementation of the second aspect.

According to a seventh aspect, this application provides a chip system. The chip system is applied to an electronic device. The chip system includes one or more processors, and the one or more processors are configured to invoke computer instructions to enable the electronic device to perform the method described in the first aspect or any possible implementation of the first aspect, or the method described in the second aspect or any possible implementation of the second aspect.

In a possible implementation, the chip system described above in this application further includes at least one memory, and the at least one memory stores instructions. The memory may be a storage unit, for example, a register or a cache, inside the chip system, or may be a storage unit (for example, a read-only memory or a random access memory) of the chip system.

It should be understood that, the third aspect to the seventh aspect of this application correspond to the technical solutions of the first aspect (or the second aspect) of this application, and beneficial effects achieved in the aspects and corresponding feasible implementations are similar. Details are not described again.

### BRIEF DESCRIPTION OF DRAWINGS

FIG. 1 is a schematic diagram of an interface in an AON camera according to an embodiment of this application;
FIG. 2A and FIG. 2B are a schematic diagram of a scenario according to an embodiment of this application;
FIG. 3 is a schematic diagram of a hardware structure of an electronic device according to an embodiment of this application;
FIG. 4 is a schematic diagram of a software structure of an electronic device according to an embodiment of this application;
FIG. 5 is a schematic diagram of a software architecture for performing power supply management on an AP side according to an embodiment of this application;
FIG. 6A, FIG. 6B, and FIG. 6C are a schematic diagram of interaction between modules in a control method for an electronic device according to an embodiment of this application;
FIG. 7 is a schematic diagram of interaction between modules for starting up to verify an AON camera according to an embodiment of this application;
FIG. 8 is a schematic diagram of power-on duration according to an embodiment of this application;
FIG. 9 is a schematic diagram of interaction between modules in a power-off method according to an embodiment of this application;
FIG. 10 is a schematic diagram of a software architecture for performing power supply management on a sensor hub side according to an embodiment of this application;
FIG. 11 is a schematic diagram of interaction between modules in another control method for an electronic device according to an embodiment of this application;
FIG. 12 is a schematic diagram of an interface for using an AON camera according to an embodiment of this application;
FIG. 13A and FIG. 13B are a schematic diagram of interaction between modules in another power-off method according to an embodiment of this application;
FIG. 14 is a schematic flowchart of a control method for an electronic device according to an embodiment of this application; and
FIG. 15 is a schematic diagram of a structure of a chip according to an embodiment of this application.

### DESCRIPTION OF EMBODIMENTS

To clearly describe the technical solutions in the embodiments of this application, the following briefly describes some terms and technologies in the embodiments of this application.

### 1. Power management integrated circuit (power management integrated circuit, PMIC)

The PMIC may be understood as a chip used to manage a power supply device in a system. The PMIC is integrated with a plurality of power management functions, such as voltage regulation, current control, or power conversion. In the embodiments of this application, an electronic device may perform power management on a camera by using the PMIC.

A PMXXXX chip is a type of PMIC. The PMXXXX chip described in the embodiments of this application is a power management chip of a specific brand. XXXX may be formed by different identifiers such as numbers or letters. Generally, the electronic device may include the PMXXXX chip and a first PMIC. The PMXXXX chip may control power management on an AON camera, and the first PMIC may control power management on another camera.

It may be understood that control logic used by a specific power management chip (for example, the PMXXXX chip) to perform power management on the AON camera is relatively fixed, and cannot be adjusted based on an actual requirement of the AON service, and therefore, applicability is relatively low. In the embodiments of this application, PMXXXX may be replaced with the first PMIC, to improve applicability of performing power management on the AON camera, and reduce use costs.

### 2. AON camera

The AON camera may be understood as a camera that can keep an on state for a long time. The AON camera can obtain an image in real time, and analyze the image by using an algorithm, to extract useful information.

All AON services described in the embodiments of this application are implemented based on the AON camera. The AON service may include one or more of the following: a screen-off display service, a "keep screen on while looking" service, an air gesture service, an eye tracking service, or a wrist-flip code-scanning service.

With reference to descriptions of the PMIC and the AON camera, the PMIC may establish a connection between the AON camera and a power supply, and a connection relationship between the PMIC and the AON camera is implemented by using a circuit. An input terminal of the PMIC is connected to a power supply of the AON camera, and an output terminal of the PMIC is connected to various circuit parts of the AON camera. The PMIC may control power-on and power-off of the AON camera by using an instruction.

### 3. Interface in an AON camera

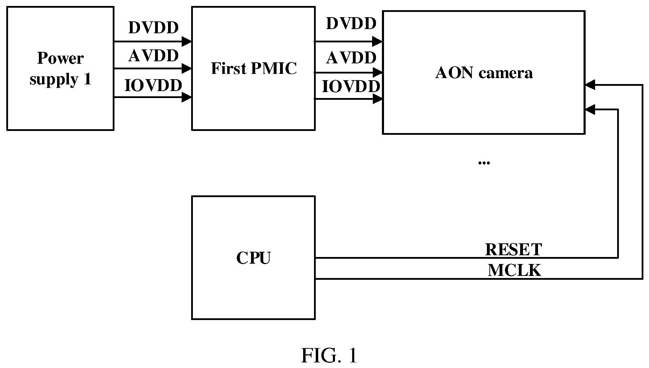

In the embodiments of this application, interfaces in the AON camera may include an IOVDD interface, an AVDD interface, a DVDD interface, a RESET interface, and an MCLK interface. In an electronic device, a relationship between each interface and the AON camera may be shown in FIG. 1. FIG. 1 is a schematic diagram of an interface in an AON camera according to an embodiment of this application.

As shown in FIG. 1, the electronic device may include a power supply 1, a first PMIC, an AON camera, and a CPU. Connections may be established between the power supply 1, the first PMIC, and the AON camera based on an IOVDD interface, an AVDD interface, and a DVDD interface. It may be understood that the IOVDD interface, the AVDD interface, and the DVDD interface may all be disposed in the power supply 1, the first PMIC, and the AON camera.

The IOVDD interface, the AVDD interface, and the DVDD interface each are a power interface in the AON camera.

IOVDD may supply power to an input/output (input/output, I/O) interface such as an integrated circuit bus (inter-integrated circuit, I2C) in the AON camera. AVDD may supply power to a light sensor and an analog-to-digital converter (analog-to-digital converter, ADC) in the AON camera. DVDD may supply power to an image signal processor (image signal processor, ISP) chip in the AON camera.

As shown in FIG. 1, a connection may be established between the AON camera and the CPU based on a RESET interface and an MCLK interface. It may be understood that both the RESET interface and the MCKL interface may be disposed in the AON camera and the CPU.

RESET may be understood as a reset signal for the AON camera, and MCLK may be understood as a master clock signal required by the AON camera. The CPU may control a status of the AON camera by using the RESET interface and the MCLK interface.

That the electronic device powers on the IOVDD interface may be understood as a process in which the electronic device provides a power supply for the IO interface in the AON camera. In a process of powering on the IOVDD interface, the PMIC may control the power supply 1 to provide a stable voltage for the IO interface in the AON camera.

That the electronic device powers on the AVDD interface may be understood as a process in which the electronic device provides a power supply for an analog circuit in the AON camera. In a process of powering on the AVDD interface, the PMIC may provide a stable AVDD voltage for the analog circuit.

That the electronic device powers on the DVDD interface may be understood as a process in which the electronic device provides a power supply for an ISP and the like in the AON camera. In a process of powering on the DVDD interface, the PMIC may control the power supply 1 to provide a stable voltage 1 for the ISP and the like. For example, the voltage 1 may be set to 0.95 volts (V) - 1.2 V.

That the electronic device powers on the RESET interface may be understood as a process in which the electronic device initiates a RESET signal to the AON camera by using the CPU. In a process of powering on the RESET interface, an AON ISP may set the RESET signal to a high level, to trigger a reset operation for the AON camera. The RESET signal is used to restore a circuit to an initial state. For example, when the camera is started or abnormal, the RESET signal is activated, and resets a register, a state machine, and the like in the circuit to the initial state to ensure that the camera can start and operate normally.

That the electronic device powers on the MCLK interface may be understood as a process in which the electronic device initiates an MCLK signal to the AON camera by using the CPU. In a process of powering on the MCLK interface, the AON ISP may set the MCLK signal to a high level. The MCLK signal is used to control and synchronize various operations in a circuit. The MCLK signal ensures that the circuit operates at a correct moment to implement various functions of the AON camera, such as image capturing, processing, and transmission.

### 4. Other terms

In the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not define a definite difference.

It should be noted that the word "example", "for example", or the like in the embodiments of this application is used to represent giving an example, an illustration, or a description. Any embodiment or design solution described as "example" or "for example" in this application should not be construed as being preferred or advantageous over other embodiments or design solutions. Exactly, the word such as "example" or "for example" is intended to present a related concept in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression means any combination of these items, including any combination of a single item or a plurality of items. For example, at least one of a, b, or c may represent a, b, c, a-b, a-c, b-c, or a-b-c, where a, b, and c may be singular or plural.

### 5. Electronic device

The electronic device in the embodiments of this application may include a handheld device, a vehicle-mounted device, or the like with an AON camera. For example, some electronic devices are: a mobile phone (mobile phone), a tablet computer, a palmtop computer, a notebook computer, a mobile internet device (mobile internet device, MID), a wearable device, a virtual reality (virtual reality, VR) device, or an augmented reality (augmented reality, AR) device. This is not limited in the embodiments of this application.

The electronic device may alternatively be a wearable device. The wearable device may also be referred to as a wearable smart device, such as glasses, gloves, watches, clothing, and shoes.

The electronic device in the embodiments of this application may also be referred to as a terminal device, user equipment (user equipment, UE), a mobile station (mobile station, MS), a mobile terminal (mobile terminal, MT), a user terminal, a terminal, or the like.

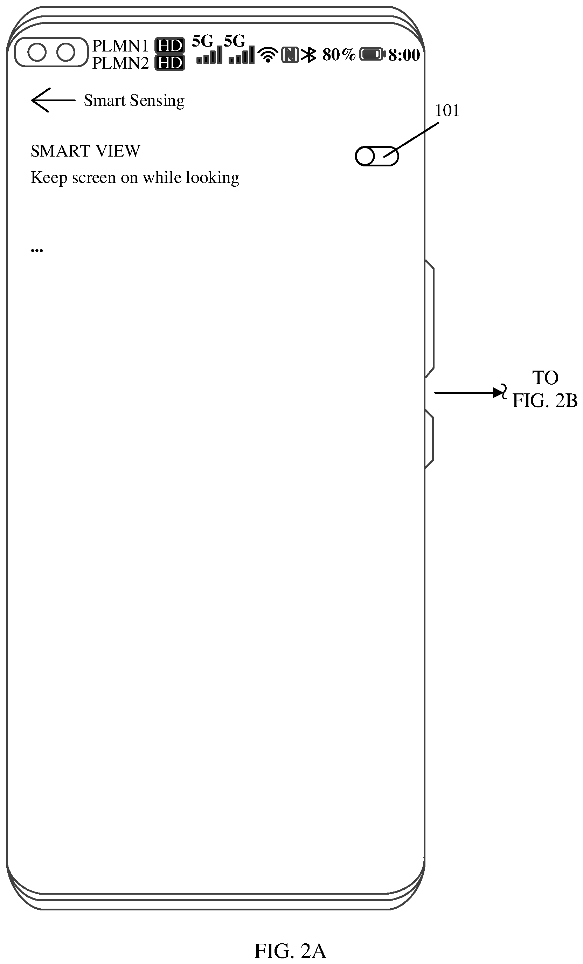

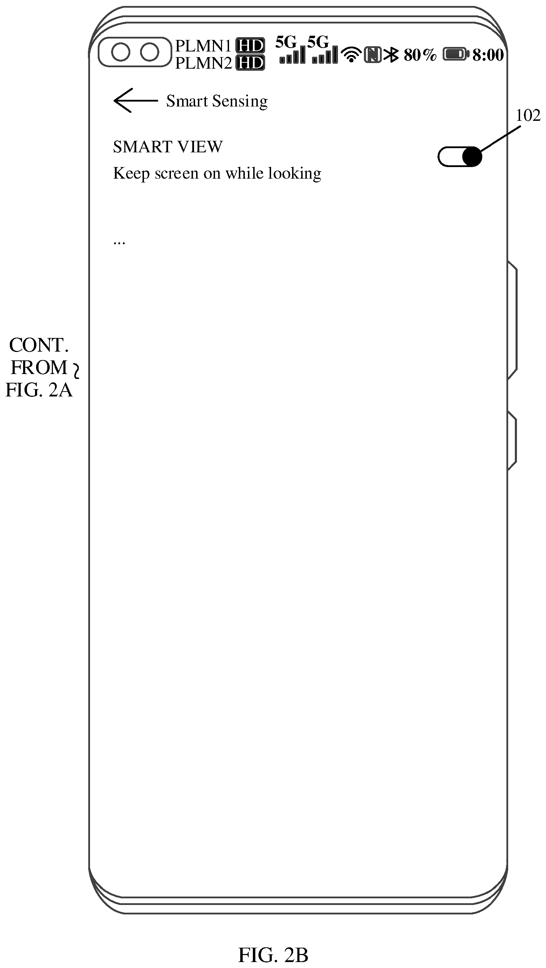

A "keep screen on while looking" service is used as an example of the AON service below to describe a process of starting and supplying power to the AON camera. For example, FIG. 2A and FIG. 2B are a schematic diagram of a scenario according to an embodiment of this application. In the embodiment corresponding to FIG. 2A and FIG. 2B, a mobile phone is used as an example of an electronic device for description. This example does not constitute a limitation on this embodiment of this application.

In response to an operation performed by a user to open a setting interface of a "keep screen on while looking" service, the electronic device displays an interface shown in FIG. 2A, and the interface may include a button 101 used to enable the "keep screen on while looking" service.

In response to a triggering operation performed by the user on the button 101, the electronic device may obtain an interface corresponding to the AON camera, and power on, by using a specific power management chip, the interface corresponding to the AON camera. In addition, in response to the triggering operation performed by the user on the button 101, the electronic device displays an interface shown in FIG. 2B, and the interface may include one or more of the following: a button 102 used to disable the "keep screen on while looking" service.

In response to the triggering operation performed by the user on the button 102, the electronic device may power off, by using the specific power management chip, the interface corresponding to the AON camera. In addition, the electronic device returns to the interface shown in FIG. 2A.

Generally, the electronic device may manage power supply to the AON camera by using the specific power management chip, and manage power supply to a rear-facing camera by using a first PMIC. However, control logic used by the specific power management chip to perform power management on the AON camera is relatively fixed, and cannot be adjusted based on an actual requirement of an AON service, and therefore, applicability is relatively low.

In view of this, an embodiment of this application provides a control method for an electronic device. A first PMIC may be used instead of a specific power management chip to supply power to an AON camera, so that applicability of performing power management on the AON camera is improved, and costs are reduced. For example, in response to a startup operation, the electronic device may control the first PMIC to power on an interface 3 in the AON camera, to detect and identify the AON camera. In response to an operation of enabling an AON service, the electronic device may control, on an AP side, the first PMIC to supply power to an interface 1 in the AON camera, to supply power to an interface 2 in the AON camera on a sensor hub side.

In this way, on the AP side, the electronic device supplies power to the interface 1 in the AON camera by using the first PMIC, so that a power supply process is not affected by the specific power management chip, and applicability of this solution is improved. In addition, power is supplied to the interface 2 in the AON camera on the sensor hub side, so that a sensor hub can perform low-power-consumption control on the AON camera by using the interface 2.

It may be understood that the interface 3 includes the interface 2 and the interface 1. At the time of startup, power-on duration of the interface 3 is first duration, and when the AON service is enabled, duration from a moment at which power-on of the interface 1 starts to a moment at which power-on of the interface 2 is completed is second duration. In this case, the second duration is shorter than the first duration.

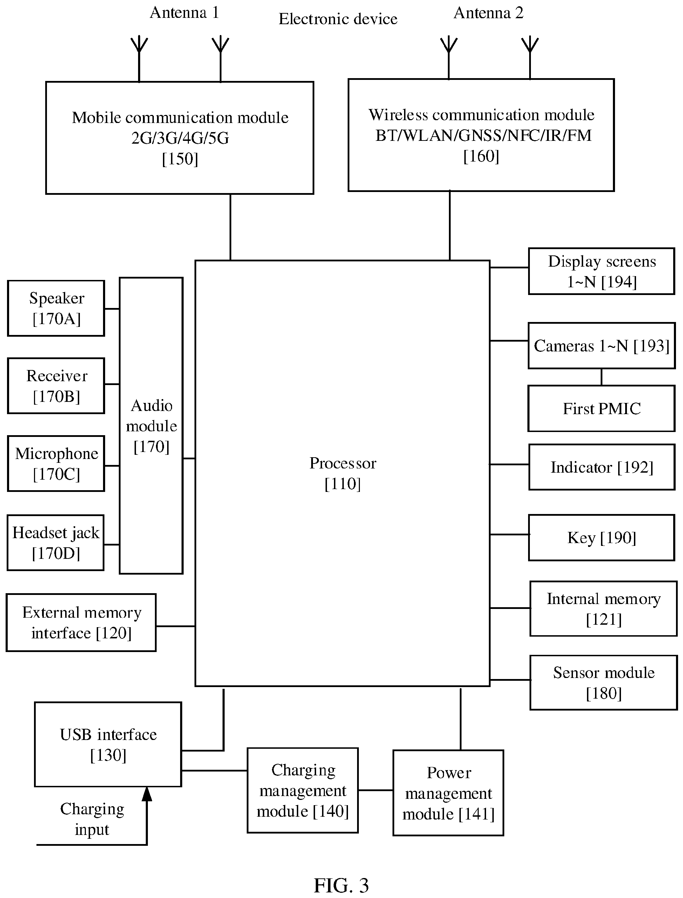

For better understanding of the embodiments of this application, a structure of an electronic device in the embodiments of this application is described below. For example, FIG. 3 is a schematic diagram of a hardware structure of an electronic device according to an embodiment of this application.

The electronic device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a key 190, an indicator 192, a camera 193, a display screen 194, and the like.

In this embodiment of this application, the sensor module 180 may include an optimal proximity sensor and an ambient light sensor. The optimal proximity sensor and the ambient light sensor may implement device status detection in an AON service.

The sensor module 180 may further include one or more of the following: a touch sensor, a pressure sensor, a gyroscope sensor, a barometric pressure sensor, a magnetic sensor, an acceleration sensor, a distance sensor, a fingerprint sensor, a temperature sensor, a touch sensor, or a bone conduction sensor (not shown in FIG. 3). This is not specifically limited in this embodiment of this application.

It may be understood that the structure illustrated in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. The processor 110 may implement a step of controlling a device to execute a corresponding instruction in a control method for an electronic device provided in the embodiments of this application.

The USB interface 130 is an interface that complies with USB standard specifications, and may be specifically a Mini USB interface, a Micro USB interface, a USB Type C interface, or the like.

The charging management module 140 is configured to receive a charging input from a charger. The power management module 141 is configured to be connected to the charging management module 140 and the processor 110.

A wireless communication function of the electronic device may be implemented by using the antenna 1, the antenna 2, the mobile communication module 150, the wireless communication module 160, a modem processor, a baseband processor, and the like.

The electronic device implements a display function by using a GPU, the display screen 194, an application processor, and the like. The GPU is a microprocessor for image processing, and is connected to the display screen 194 and the application processor.

The display screen 194 is configured to display an image, a video, and the like.

The electronic device may implement a photographing function by using the ISP, the camera 193, a video codec, the GPU, the display screen 194, the application processor, and the like.

The camera 193 is configured to capture a still image or a video. The camera 193 may include an AON camera, a rear-facing camera, and the like that are described in the embodiments of this application. The camera 193 is connected to a first PMIC.

The external memory interface 120 may be configured to be connected to an external memory card.

The internal memory 121 may be configured to store computer-executable program code, and the executable program code includes instructions.

The electronic device may implement an audio function such as music playback and recording by using the audio module 170, the speaker 170A, the receiver 170B, the microphone 170C, the headset jack 170D, the application processor, and the like.

The touch sensor may be disposed on the display screen 194. The touch sensor and the display screen 194 constitute a touchscreen, which is also referred to as a "touch control screen".

The key 190 includes a power-on key, a volume key, or the like.

A software system of the electronic device may use a layered architecture, an event-driven architecture, a microkernel architecture, a microservice architecture, a cloud architecture, or the like. Details are not described herein.

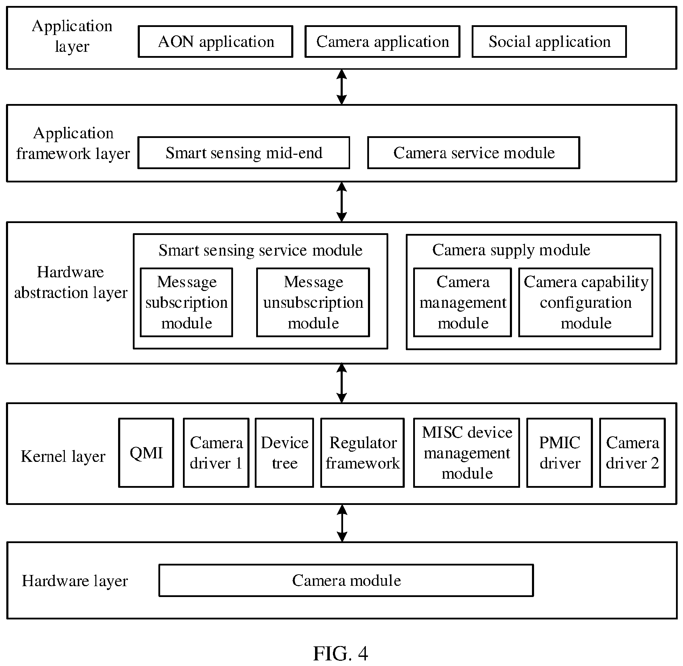

For example, FIG. 4 is a schematic diagram of a software structure of an electronic device according to an embodiment of this application. As shown in FIG. 4, in a layered architecture, software is divided into several layers, and each layer has a clear role and task. Layers communicate with each other through a software interface.

In some embodiments, an android (android) system is divided into a plurality of layers, which are an application (application, APP) layer, an application framework (framework) layer, a hardware abstraction layer (hardware abstraction layer, HAL), a kernel (kernel) layer, and the like from top to bottom. This is not limited in this embodiment of this application.

The application layer may include a series of application packages. The application layer may include one or more of the following: an AON application, a camera application, or a social application. This is not limited in this embodiment of this application.

The AON application may be understood as an application that executes an AON service. For example, the AON application may include one or more of the following: a screen-off display application, a "keep screen on while looking" application, an air gesture application, an eye tracking application, or a wrist-flip code-scanning application.

The camera application may support functions such as photographing and video recording. For example, a user may perform photographing or video recording by using a rear-facing camera or a front-facing AON camera.

The social application may provide a function such as voice chatting or video chatting. For example, in a scenario in which the user uses a video chatting function, the user may use the front-facing AON camera for a video call.

The application framework layer provides an application programming interface (application programming interface, API) and a programming framework for an application at the application layer.

The application framework layer includes some predefined interfaces. The application framework layer may include one or more of the following: a smart sensing mid-end, a camera service module, or the like.

The smart sensing mid-end may forward a message received from the AON application to a smart sensing service module, or forward a message received from a smart sensing service module to the AON application.

The camera service module may send a message of using a camera to a camera supply module, and the message of using the camera may be a message described in S1110.

In a possible implementation, the FWK layer may further include a display composer, a window manager, a content provider, a resource manager, a view system, a notification manager, or the like (not shown in FIG. 4).

An objective of the hardware abstraction layer is to abstract hardware, so as to provide a unified interface for querying a hardware device for an upper-layer application, or provide a data storage service for an upper-layer application.

The hardware abstraction layer may include one or more of the following: a smart sensing service module or a camera supply module.

The smart sensing service module is configured to implement processing on the AON service in the electronic device. For example, when detecting a subscription message, the smart sensing service module may send the subscription message to a QMI, and send a message used to power on the AON camera to a MISC device management module. When detecting an unsubscription message, the smart sensing service module may send the unsubscription message to the QMI, and send a message used to power off the AON camera to the MISC device management module.

The smart sensing service module may include one or more of the following: a message subscription module or a message unsubscription module. The message subscription module may be configured to initiate a subscription message, and the message unsubscription module may be configured to initiate an unsubscription message.

The camera supply module may be configured to forward a message received from the camera service module to a message interface (qualcomm messaging interface, QMI).

The camera supply module may include one or more of the following: a camera management module and a camera capability configuration module. The camera management module may be configured to store hardware information of a camera connected to the electronic device, and the camera capability configuration module may be configured to store capability information of the camera. The capability information may include a parameter used to describe performance and a function of the camera.

The kernel layer is a layer between hardware and software. The kernel layer is used to drive hardware, so that the hardware works. The kernel layer may include one or more of the following: a QMI, a camera driver 1, a device tree (device tree), a regulator (regulator) framework, a miscellaneous (Miscellaneous, MISC) device management module, a PMIC driver, or a camera driver 2.

The QMI may also be an abbreviation of a qualcomm modem interface, a qualcomm MSM interface, or the like. The QMI is a functional interface for inter-process communication of a plurality of processors, and serves as an interface for performing inter-core communication between an application processor (application processor, AP) and a coprocessor (coprocessor, CP). The QMI transfers data by using a shared memory driver (shared memory driver, SMD). The SMD implements a physical operation of a shared memory by operating a shared memory (shared memory, SMEM) area, or is understood as that the SMD uses the SMEM to transfer messages and data between different processors or processing cores.

The camera driver 1 may manage running of the AON camera. In this embodiment of this application, the camera driver 1 is a newly added module, and the electronic device separately manages a power supply status of the AON camera by using the camera driver 1. For example, when receiving a message used to indicate to power on the AON camera, the camera driver 1 may obtain a power supply interface in the AON camera from the device tree, and supply power to the AON camera by invoking the regulator framework and the PMIC driver.

The device tree may be understood as a data structure that describes a hardware configuration, and is used to describe a configuration and an attribute of a hardware device. In this embodiment of this application, the device tree may include interface information (for example, interface information of an interface 1) used for supplying power to the AON camera. For details, refer to the description in S603.

The MISC device management module is configured to forward a message received from the smart sensing service module to the camera driver 1, or forward a message received from the camera driver 1 to the smart sensing service module.

The regulator framework is configured to manage power supply. The regulator framework provides a mechanism that allows a kernel to regulate individual independent power outputs.

The PMIC driver is configured to control and regulate the first PMIC, and is responsible for managing power supply to the AON camera.

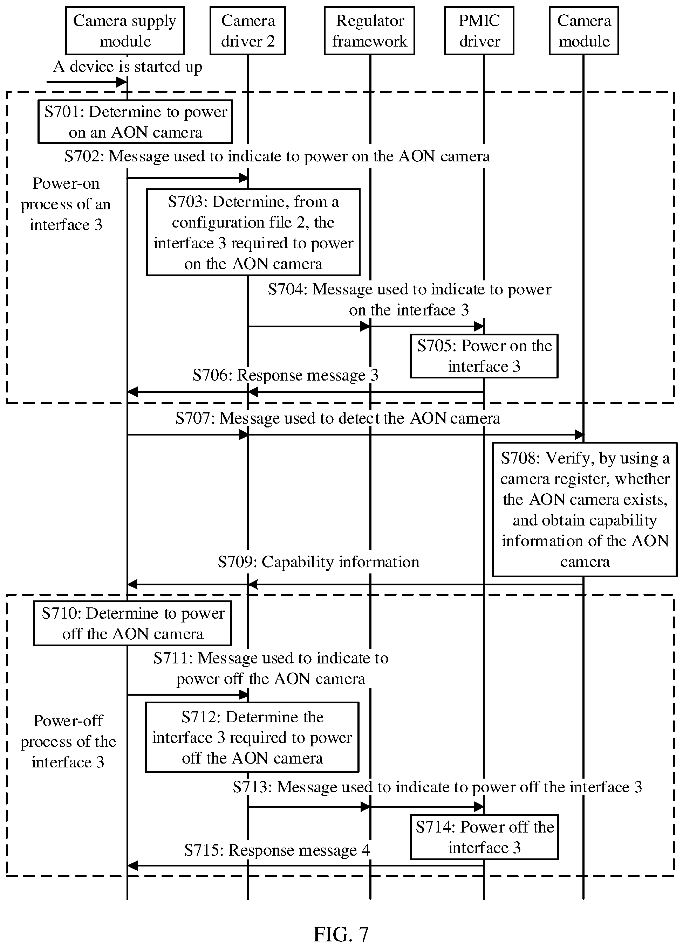

The camera driver 2 may be configured to perform camera detection or power supply detection on any camera in the electronic device when the electronic device is started up. Refer to the description in FIG. 7. Alternatively, the camera driver 2 may be configured to manage running of another camera except the AON camera.

It may be understood that communication between the HAL layer and the kernel layer may be implemented by using the QMI.

The hardware layer may include one or more of the following: a camera module or the like. The camera module may include the AON camera, and the AON camera may be configured to capture image information and transfer the image information to a sensor hub for image processing.

In a possible implementation, the electronic device may further include the sensor hub. As a coprocessor, the sensor hub may implement communication with the HAL layer, the kernal layer, the hardware layer, and the like. It may be understood that the sensor hub is a solution of a combination of software and hardware above a lightweight operating system with low power consumption, and a main function of the sensor hub is to connect and process data from various sensor devices, so as to implement low-power-consumption status identification and return an identification result to the kernel layer. For example, the sensor hub may obtain sensor data, and determine, by analyzing the sensor data, to power off the AON camera in advance. In this way, the sensor hub may identify, based on the sensor data, that the sensor hub currently needs to be in a low power consumption scenario so as to reduce power consumption by powering off the camera. For a specific process, reference may be made to the description in S616.

The sensor hub may include one or more of the following: an AON ISP. The AON ISP may control the PMIC driver to execute a power supply policy, or the AON ISP may be configured to perform image processing on image data obtained from the camera module, so as to improve image quality.

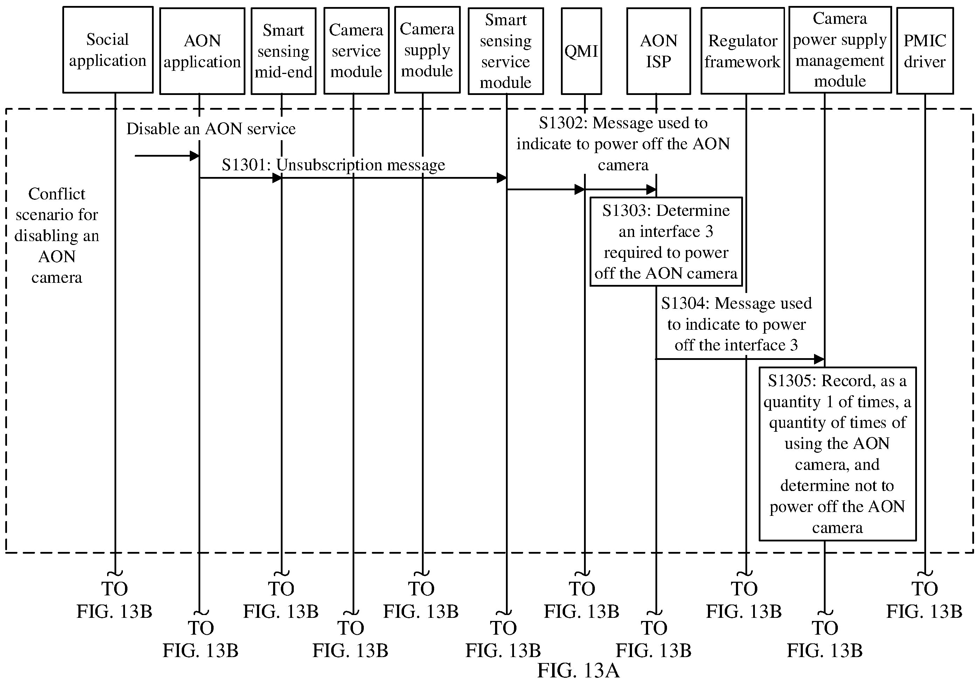

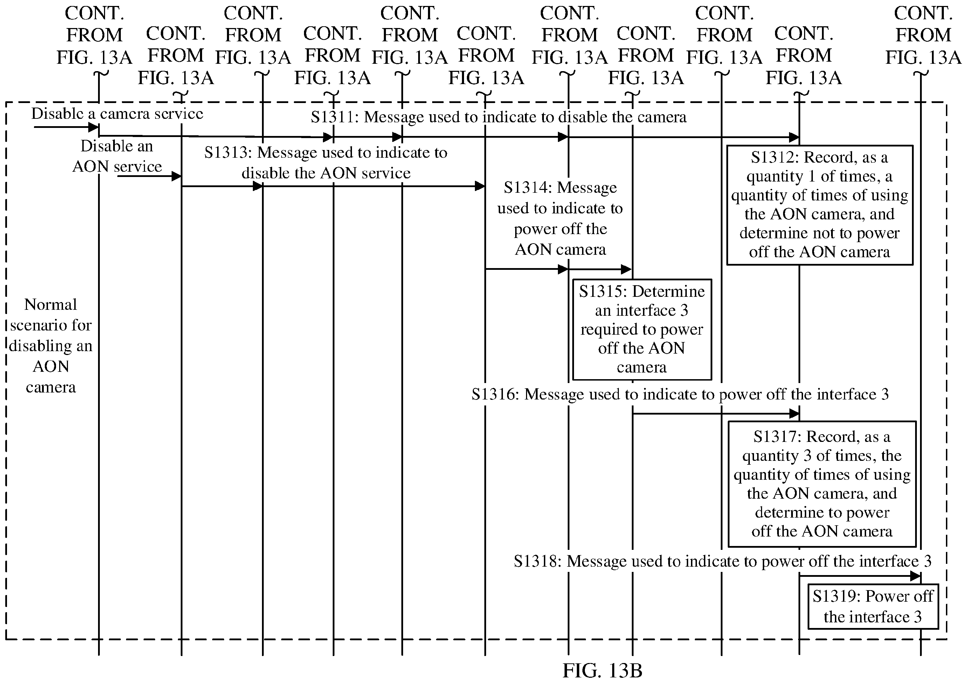

In a possible implementation, the sensor hub may also include a camera power supply management module. The camera power supply management module may record a quantity of times of using the camera, and control, based on the quantity of times of using the camera, a process of powering off the camera. For example, the camera power supply management module may power off the AON camera when detecting that no service is using the AON camera. Refer to the description in FIG. 13A and FIG. 13B.

In a possible implementation, the sensor hub may also include a PMIC driver. For a function of the PMIC driver, reference may be made to the description of the PMIC driver at the kernel layer. Details are not described herein again.

It may be understood that, a software layer involved in a software architecture, a module included at the software layer, and a function of the module are not specifically limited in this embodiment of this application.

The following describes in detail, by using specific embodiments and with reference to the description of the software architecture in FIG. 4, the technical solutions of this application and how to resolve the foregoing technical problems by using the technical solutions of this application. The following several specific embodiments may be implemented independently, or may be combined with each other. For same or similar concepts or processes, details may not be described in some embodiments again.

Embodiments of this application provide two control methods for an electronic device, including: An electronic device performs, on an AP side, power supply management on an AON camera by using a first PMIC (refer to the description of a scenario 1), and the electronic device performs, on a sensor hub side, power supply management on the AON camera by using the first PMIC (refer to description of a scenario 2).

Scenario 1: An electronic device performs, on an AP side, power supply management on an AON camera by using a first PMIC.

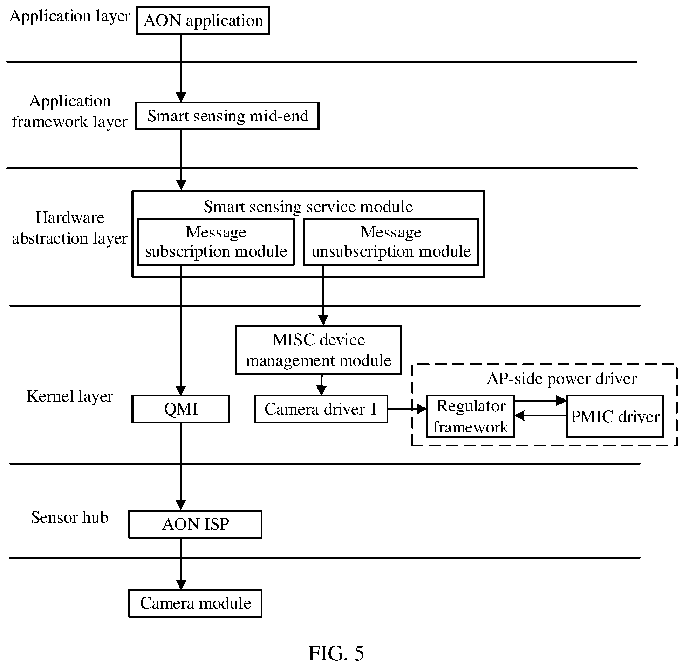

FIG. 5 is a schematic diagram of a software architecture for performing power supply management on an AP side according to an embodiment of this application. In the embodiment corresponding to FIG. 5, an electronic device may include one or more of the following: an AON application, a smart sensing mid-end, a smart sensing service module, a MISC device management module, a camera driver 1, a QMI, an AON ISP, a regulator framework, a PMIC driver, or a camera module. The smart sensing service module includes a message subscription module and a message unsubscription module.

The regulator framework and the PMIC driver may be disposed in an AP-side power driver at a kernel layer, and the AP-side power driver is configured to perform power management on the AON camera on an AP side.

In an implementation, after the smart sensing service module senses that an AON service is enabled, the smart sensing service module may send a power-on message (for example, a message, in S602, used to indicate to power on the AON camera) to the camera driver 1 along the MISC device management module. The camera driver 1 may obtain all interfaces (for example, an interface 3) required to power on the AON camera, to indicate the AP-side power driver to power on all the interfaces.

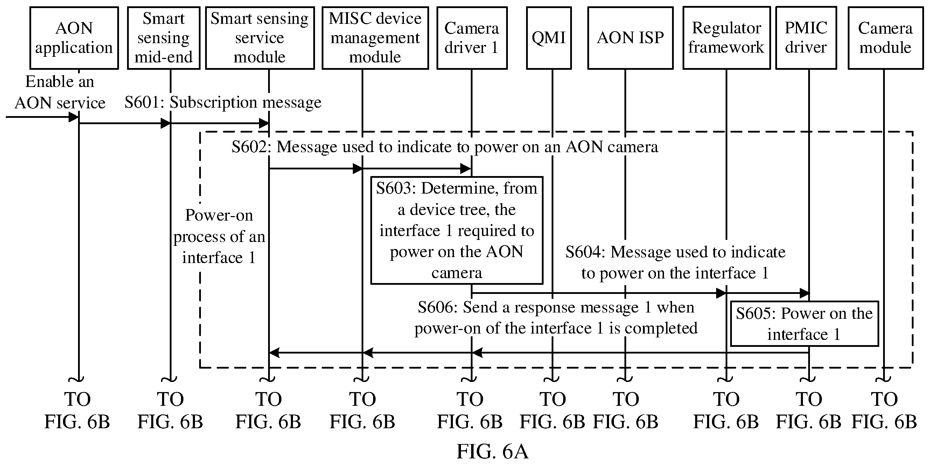

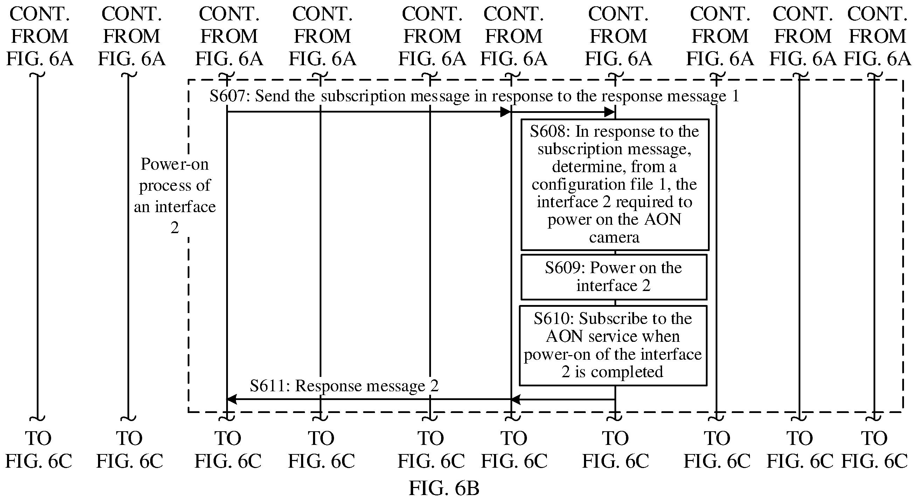

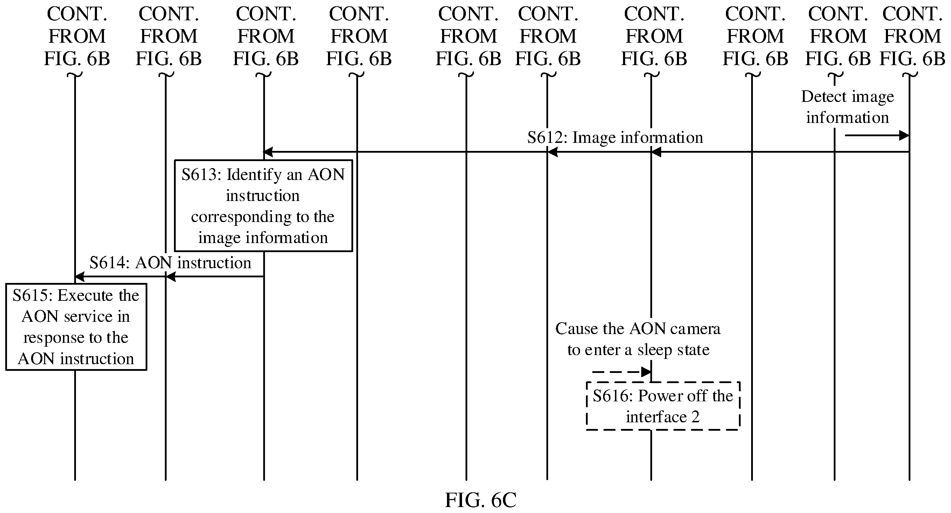

In another implementation, after the smart sensing service module senses that the AON service is enabled, the smart sensing service module may send a power-on message to the camera driver 1 along the MISC device management module. The camera driver 1 may obtain some interfaces (for example, an interface 1) required to power on the AON camera. The electronic device indicates the AP-side power driver to power on some interfaces in the AON camera on the AP side. In addition, the electronic device indicates the AON ISP to power on other interfaces (for example, an interface 2) in the AON camera on a sensor hub side. For a specific power-on process, reference may be made to the description in FIG. 6A, FIG. 6B, and FIG. 6C.

The interface 3 includes the interface 2 and the interface 1. For interface statuses of the interface 1 and the interface 2, reference may be made to description in FIG. 6A, FIG. 6B, and FIG. 6C. For an interface status of the interface 3, reference may be made to description in FIG. 7.

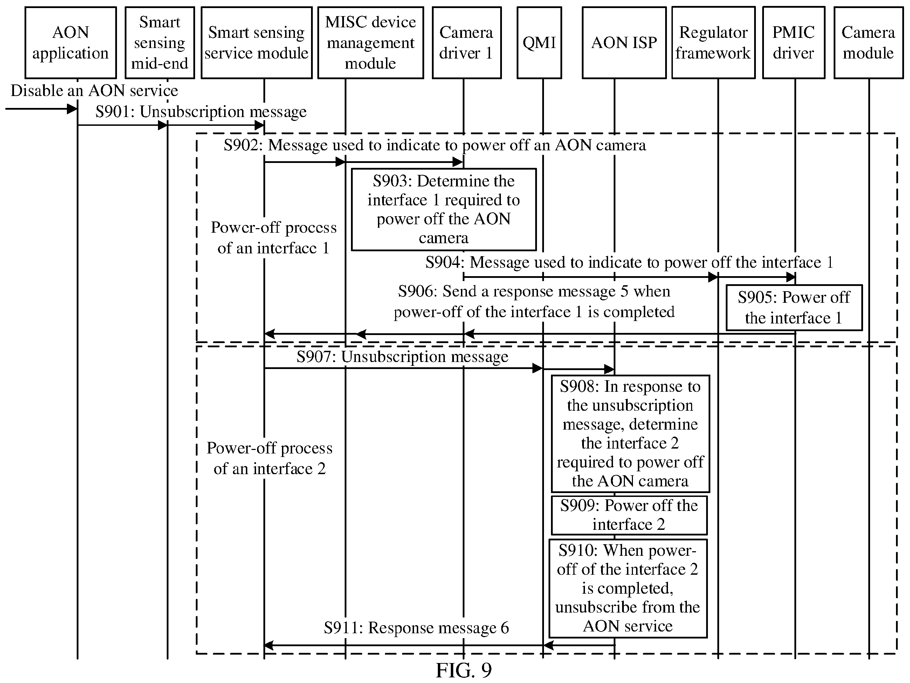

Based on the software architecture described in FIG. 5, the electronic device may power on the AON camera when the AON service is enabled (refer to the description in FIG. 6A, FIG. 6B, and FIG. 6C), or may perform power supply detection on the AON camera when the device is started up (refer to the description in FIG. 7), or may power off the AON camera when the AON service is disabled (refer to the description in FIG. 9).

For example, FIG. 6A, FIG. 6B, and FIG. 6C are a schematic diagram of interaction between modules in a control method for an electronic device according to an embodiment of this application. For a module included in FIG. 6A, FIG. 6B, and FIG. 6C, reference may be made to the description in FIG. 5. Details are not described herein again.

As shown in FIG. 6A, FIG. 6B, and FIG. 6C, the control method for an electronic device may include the following steps.

S601: In response to an operation performed by a user to enable an AON service, a smart sensing service module obtains a subscription message from an AON application.

The subscription message is used to subscribe to the AON service. The subscription message may include an identifier of an AON camera and an identifier of the AON service. It may be understood that, before the electronic device subscribes to the AON service based on the subscription message, the electronic device may power on the AON camera, to ensure normal running of the AON service after the subscription.

When the AON service is a "keep screen on while looking" service, the operation of enabling the AON service may be a triggering operation performed by the user on a button 101 in an interface shown in FIG. 2A.

For example, in response to the operation performed by the user to enable the AON service, the AON application may send the subscription message to a smart sensing mid-end, and the smart sensing mid-end sends the subscription message to the smart sensing service module.

After the AON service is enabled, the electronic device may control, based on S602-S606, to power on an interface 1, and then control, based on S607-S611, to power on an interface 2.

In a possible implementation, the smart sensing service module may set delayed sending time, such as 1 second, for the received subscription message. For example, the smart sensing service module may receive the subscription message, and send the subscription message to an AON ISP along a QMI after determining that duration of waiting for the subscription message reaches the delayed sending time, so that the AON ISP may perform steps in S608-S610. In this scenario, the electronic device may complete power-on of the interface 1 within duration such as 1 second before the subscription message is sent to the AON ISP, and complete power-on of the interface 2 based on the subscription message after 1 second.

S602: A camera driver 1 obtains, from the smart sensing service module, a message used to indicate to power on the AON camera.

The message used to indicate to power on the AON camera includes the identifier of the AON camera.

For example, in a case in which a MISC device management module enables a node 1 in advance, the camera driver 1 may send the message used to indicate to power on the AON camera to the MISC device management module, and the MISC device management module may send, based on the node 1, the message used to indicate to power on the AON camera to the camera driver 1.

S603: The camera driver 1 determines, from a device tree, the interface 1 required to power on the AON camera.

The device tree is used to describe a hardware configuration of a device, so that an operating system can correctly configure and drive the device. For example, the camera driver 1 may obtain a hardware configuration of the AON camera, such as interface information of the AON camera, from the device tree based on the identifier of the AON camera.

The interface information of the AON camera may include the interface 1, a power-on sequence of the interface 1, a power-off sequence of the interface 1, a power-on time interval of the interface 1, a power-off time interval of the interface 1, and the like.

The interface 1 may include an IOVDD interface, an AVDD interface, and a DVDD interface. The IOVDD interface, the AVDD interface, and the DVDD interface each may be understood as a power interface configured to supply power to the AON camera. For example, content included in the device tree may be shown as follows:
cam_vio_supply=<&L5N>; // the IOVDD interface corresponds to an LDO5 interface in a first PMIC;
cam_vdig_supply=<&L2N>; // the DVDD interface corresponds to an LDO2 interface in the first PMIC;
cam_vana_supply=<&L3N>; // the AVDD interface corresponds to an LDO3 interface in the first PMIC;
power_on_sequence="iovdd","avdd","dvdd"; // the power-on sequence of the interface 1;
power_on_delay=<1,1,1>; // the power-on time interval of the interface 1, where the time interval may be 1 millisecond;
power_off_sequence="dvdd","avdd","iovdd"; // the power-off sequence of the interface 1;
power_off_delay=<0,0,0>; // the power-off time interval of the interface 1.

It may be understood that the device tree may be pre-configured in a kernel layer, so that the camera driver 1 can access the device tree anytime. For different AON cameras, other interfaces except the interface 1 may be disposed in the device tree, such as a voice coil motor voltage (VCMVDD) interface or an optical image stabilization voltage (OISVDD) interface. The VCMVDD interface may be understood as an interface for supplying power to a focusing motor in the camera, and the OISVDD may be understood as an interface for supplying power to an optical image stabilization module in the camera.

In a possible implementation, the interface 1 may alternatively include an IOVDD interface, an AVDD interface, a DVDD interface, a RESET interface, and an MCLK interface. In this case, the electronic device may perform power management on all interfaces in the AON camera on the AP side.

S604: A PMIC driver obtains, from the camera driver 1, a message used to indicate to power on the interface 1.

The message used to indicate to power on the interface 1 may include: the interface 1, the power-on sequence of the interface 1, the power-on time interval of the interface 1, and the like.

For example, the camera driver 1 may send the message used to indicate to power on the interface 1 to a regulator framework, and the regulator framework sends the message used to indicate to power on the interface 1 to the PMIC driver. The PMIC driver may register a low-dropout linear regulator (low dropout regulator, LDO) structure with the regulator framework and set a voltage value of the interface 1. The voltage value of the interface 1 may include: a voltage value corresponding to IOVDD, a voltage value corresponding to AVDD, and a voltage value corresponding to DVDD.

S605: The PMIC driver powers on the interface 1.

S606: The smart sensing service module obtains a response message 1 from the PMIC driver.

The response message 1 is used to indicate that power-on of the interface 1 in the AON camera is completed. For example, when determining that power-on of the interface 1 is completed, the PMIC driver may return the response message 1 to the smart sensing service module via the camera driver 1 and the MISC device management module.

It may be understood that the electronic device may supply power to a power supply interface in the AON camera on the AP side by using S602-S606. A power supply process is not limited to a specific power management chip, and may be widely applied to an electronic device that uses the first PMIC.

S607: The AON ISP obtains the subscription message from the smart sensing service module in response to the response message 1.

For example, when the smart sensing service module receives the response message 1, the smart sensing service module may initiate the subscription message, and send the subscription message to the AON ISP via the QMI. After the AON ISP receives the subscription message, the AON ISP may perform S608-S610.

S608: In response to the subscription message, the AON ISP determines, from a configuration file 1, an interface 2 required to power on the AON camera.

The configuration file 1 may be a pre-compiled PB file. The configuration file 1 may include the interface 2, a power-on sequence of the interface 2, a power-off sequence of the interface 2, a power-on time interval of the interface 2, a power-off time interval of the interface 2, and the like. The interface 2 may include at least one control signal interface, such as a RESET interface and/or an MCLK interface.

For example, in the configuration file 1, information about power-on of the interface 2 may include: configType=RESET, configValue=1, delayMs=5, and the like; configType=MCLK; configValue=19000000 hertz (hz); delayMs=1 millisecond (ms) and the like. configValue=1 may be understood as a pull-up, configValue=19000000 hz may be understood as a clock frequency, and delayMs may be understood as delayed time. A power-on sequence may be sequentially as follows: RESET and MCLK. It may be understood that information about power-off of the interface 2 may be similar to the information about power-on of the interface 2, and details are not described herein again.

It may be understood that in a solution of supplying power to the AON camera by using a specific power management chip, the configuration file 1 may include settings of the IOVDD interface, the AVDD interface, the DVDD interface, the RESET interface, the MCLK interface, and the like. In this embodiment of this application, the specific power management chip may be replaced with the first PMIC, interfaces such as the IOVDD interface, the AVDD interface, and the DVDD interface that are used to supply power to the AON camera are configured in the device tree, and only settings of the RESET interface and the MCLK interface are reserved in the configuration file 1.

Alternatively, in this embodiment of this application, settings of all the IOVDD interface, the AVDD interface, the DVDD interface, the RESET interface, and the MCLK interface may be configured in the device tree. In this case, the interface may not be set in the configuration file 1; in other words, the electronic device does not need to perform S608-S609. This is not limited in this embodiment of this application.

S609: The AON ISP powers on the interface 2.

S610: When power-on of the interface 2 is completed, the AON ISP subscribes to the AON service.

It may be understood that, that the AON ISP subscribes to the AON service is equivalent to establishing a channel between the smart sensing service module, the QMI, and the AON ISP. Subsequently, when receiving image information in the AON camera, the AON ISP may return the image information to the smart sensing service module via the QMI. The smart sensing service module identifies the image information, and returns an identification result to the AON application.

S611: The smart sensing service module obtains a response message 2 from the AON ISP.

The response message 2 is used to indicate that subscription to the AON service is completed.

It may be understood that the electronic device may complete power supply to the AON camera based on S601-S611. In a case in which power supply to the AON camera is completed, the electronic device may execute the AON service based on image information obtained by the AON camera in real time. Refer to the following description in S612-S615.

S612: When detecting the image information, the smart sensing service module obtains the image information from a camera module.

S613: The smart sensing service module identifies an AON instruction corresponding to the image information.

Identifying the AON instruction corresponding to the image information is described as an example with reference to the "keep screen on while looking" service described in FIG. 2A and FIG. 2B. For example, when the smart sensing service module determines, based on the image information, that the user is looking at the screen, the smart sensing service module may generate an AON instruction, and in this case, the AON instruction is used to increase screen brightness. Alternatively, when the smart sensing service module determines, based on the image information, that the user is not looking at the screen, the smart sensing service module may generate an AON instruction, and in this case, the AON instruction is used to decrease screen brightness.

It may be understood that in different service scenarios, the electronic device may also generate different AON instructions based on different image information. A specific meaning of the AON instruction is not limited in this embodiment of this application.

S614: The AON application obtains the AON instruction from the smart sensing service module.

S615: The AON application executes the AON service in response to the AON instruction.

In a possible implementation, S616 is: The AON ISP powers off the interface 2 in response to a message of causing the AON to enter a sleep state.

For example, when determining, based on sensor data such as ambient light data and/or proximity light data, to cause the AON camera to enter the sleep state, a sensor hub may send, to the AON ISP, a message used to indicate to cause the AON camera to enter the sleep state, and the AON ISP may power off the interface 2, to reduce power consumption. In this scenario, because the interface 1 is controlled on the AP side, the interface 1 is always in a powered-on state. It may be understood that in this scenario, the ambient light data may be less than or equal to an ambient light threshold in a device sleep state, and the proximity light data may be greater than or equal to a proximity light value in the device sleep state.

Further, when determining, based on the sensor data such as the ambient light data and/or the proximity light data, to wake up the AON camera, the sensor hub may send a message used to indicate to wake up the AON camera to the AON ISP, and the AON ISP may power on the interface 2. It may be understood that in this scenario, the ambient light data may be greater than the ambient light threshold in the device sleep state, and the proximity light data may be less than the proximity light value in the device sleep state.

Based on the description of S616, it may be understood that because the sensor hub may identify a status of the electronic device based on the sensor data or the like, disposing the interface 2 on a sensor hub side can facilitate low-power-consumption control on the AON camera.

It may be understood that the control method for an electronic device provided in this embodiment of this application may not be limited to a power management chip of a specific brand. Through establishment of a new data channel, power management for the AON camera based on the first PMIC is implemented.

Before S601, the electronic device may perform power supply detection on the AON camera and detect a device capability of the AON camera when the device is started up, so as to ensure normal running of the AON camera.

For example, FIG. 7 is a schematic diagram of interaction between modules for starting up to verify an AON camera according to an embodiment of this application. In the embodiment corresponding to FIG. 7, an electronic device may include one or more of the following: a camera supply module, a camera driver 2, a regulator framework, a PMIC driver, or a camera module.

It may be understood that when detecting that the electronic device is started up, the electronic device may perform a process of powering on the AON camera and a process of powering off the AON camera (for a power-on process, refer to the description in S701-S706, and for a power-off process, refer to the description in S710-S715) and a capability detection process for the AON camera (refer to the description in S707-S709), to ensure normal running of the AON camera.

S701: In response to an operation of starting up a device, a camera supply module determines to power on the AON camera.

The camera supply module may determine a camera in the electronic device by using a camera management module, and perform the following power supply detection and capability detection processes for each camera. The AON camera is used as an example below to describe power supply detection and capability detection processes for the AON camera as an example.

S702: The camera driver 2 obtains, from the camera supply module, a message used to indicate to power on the AON camera.

S703: Determine, from a configuration file 2, an interface 3 required to power on the AON camera.

The configuration file 2 may be a pre-compiled BIN file, and the configuration file 2 includes all interfaces in the AON camera.

The configuration file 2 may include the interface 3, a power-on sequence of the interface 3, a power-off sequence of the interface 3, a power-on time interval of the interface 3, a power-off time interval of the interface 3, and the like. The interface 3 may include an IOVDD interface, an AVDD interface, a DVDD interface, a RESET interface, an MCLK interface, and the like.

For example, in the configuration file 2, power-on information of the interface 3 may include: configType=RESET, configValue=1, delayMs=5; configType=MCLK, configValue=19000000, delayMs=1; configType=IOVDD, configValue=1, delayMs=1; configType=AVDD, configValue=1, delayMs=1; configType=DVDD, configValue=1, delayMs=1. A power-on sequence may be sequentially as follows: RESET, MCLK, IOVDD, AVDD, and DVDD. It may be understood that power-off information of the interface 3 may be similar to the power-on information of the interface 3, and details are not described herein again.

It may be understood that the interface 3 includes an interface 1 and an interface 2; in other words, the electronic device may power on all interfaces in the AON camera when the electronic device is started up.

S704: The PMIC driver obtains, from the camera driver 2, a message used to indicate to power on the interface 3.

For example, the camera driver 2 may send the message used to indicate to power on the interface 3 to the regulator framework, and the regulator framework powers on the interface 3 by using the PMIC driver. For a process in which the electronic device performs power-on based on the regulator framework and the PMIC driver, reference may made to the description in S604. Details are not described herein again.

S705: The PMIC driver powers on the interfaces 3.

S706: The camera supply module obtains a response message 3 from the PMIC driver.

The response message 3 is used to indicate that power-on of the interface 3 in the AON camera is completed. For example, the PMIC driver may return the response message 3 to the camera supply module via the camera driver 2.

It may be understood that after power-on of the AON camera is completed, the electronic device may perform capability detection on the AON camera based on S707-S709.

S707: The camera module obtains, from the camera supply module, a message used to detect the AON camera.

The message used to detect the AON camera may include an identifier of the AON camera. For example, the camera supply module may send the message used to detect the AON camera to the camera driver 2, and the camera driver 2 may send the message used to detect the AON camera to the camera module.

S708: The camera module reads a camera register, verifies whether the AON camera exists, and obtains capability information of the AON camera.

In response to a message used to indicate to detect the camera, the camera module may read the camera register based on the identifier of the AON camera, and obtain a parameter of the camera from the camera register (for example, obtain the parameter of the camera based on the identifier of the AON camera) to identify whether the camera is the AON camera. In addition, the camera module reads the capability information of the AON camera in the camera register, and the capability information may include one or more of the following: image resolution, a frame rate, an image format, a lens parameter, and the like that are supported by the camera.

S709: The camera supply module obtains the capability information from the camera module.

For example, the camera module may send the capability information to the camera driver 2, and the camera driver 2 may return the capability information to the camera supply module. Further, the camera supplying module may store the capability information reported by the camera module into a camera capability configuration module for subsequent use.

S710: The camera supply module determines to power off the AON camera.

S711: The camera driver 2 obtains, from the camera supply module, a message used to indicate to power off the AON camera.

S712: The camera driver 2 determines to power off the interface 3 required to power off the AON camera.

It may be understood that the camera driver 2 may perform, based on a configuration in the configuration file 2, a process of powering off the interface 3.

S713: The PMIC driver obtains, from the camera driver 2, a message used to indicate to power off the interface 3.

S714: The PMIC driver powers off the interfaces 3.

S715: The camera supply module obtains a response message 4 from the PMIC driver.

The response message 4 is used to indicate that power-off of the AON camera is completed. For example, the PMIC driver may return the response message 4 to the camera supply module via the camera driver 2.

It may be understood that the power-off process described in S710-S715 may be similar to the power-on process described in S701-S706, and a specific process is not described again.

Based on this, when the electronic device is started up, the electronic device may perform power-on detection on all interfaces in the AON camera at once, to ensure availability of the camera.

With reference to the description in FIG. 6A, FIG. 6B, and FIG. 6C and FIG. 7, power-on duration of the AON camera at a startup detection stage is shorter than power-on duration of the AON camera at an AON service enabling stage.

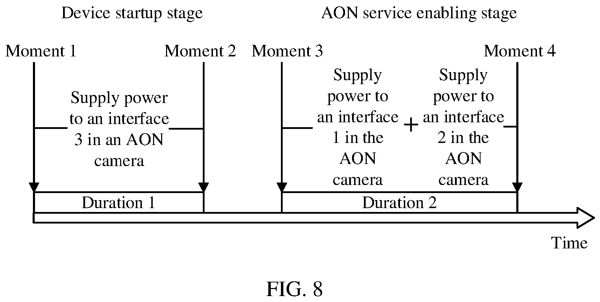

For example, FIG. 8 is a schematic diagram of power-on duration according to an embodiment of this application.

At a device startup stage, an electronic device may sequentially supply power to five interfaces in an interface 3 based on S705 at a moment 1, and complete power supply at a moment 2, where total power supply duration may be duration 1.

At an AON service enabling stage, the electronic device may sequentially supply power to three interfaces in an interface 1 based on a step in S605 at a moment 3. After power supply to the interface 1 is completed, the electronic device may sequentially supply power to two interfaces in an interface 2 based on a step in S609, and complete power supply to the interface 2 at a moment 4. In other words, total power supply duration from a moment at which supply power to the interface 1 starts to a moment at which power supply to the interface 2 is completed may be duration 2.

It may be understood that the electronic device may first supply power to the interface 1, and then supply power to the interface 2 after power supply to the interface 1 is completed, and there are steps such as S606-S608 between power supply to the interface 1 and power supply to the interface 2, and consequently, duration of supplying power to all interfaces in the camera AON is prolonged. Alternatively, due to delayed sending time (as described in S601) carried in a subscription message, duration of supplying power to all interfaces in the camera AON is also prolonged. Therefore, power supply duration (for example, the duration 1) of the AON camera at the device startup stage is less than power supply duration (for example, the duration 2) of the AON camera at the AON service enabling stage.

In a case in which the AON camera is powered on based on the embodiment corresponding to FIG. 6A, FIG. 6B, and FIG. 6C, the electronic device may perform power-off processing on the AON camera when the AON service is disabled. FIG. 9 is a schematic diagram of interaction between modules in a power-off method according to an embodiment of this application.

As shown in FIG. 9, the power-off method may include the following steps.

S901: In response to an operation performed by a user to disable an AON service, a smart sensing service module obtains an unsubscription message from an AON application.

When the AON service is a "keep screen on while looking" service, an operation of disabling the AON service may be a triggering operation performed by the user on a button 102 in an interface shown in FIG. 2B.

For example, in response to the operation performed by the user to disable the AON service, the AON application may send the unsubscription message to a smart sensing mid-end, and the smart sensing mid-end sends the unsubscription message to the smart sensing service module.

After the AON service is disabled, the electronic device may control, based on S902-S906, to power off an interface 1, and further control, based on S907-S911, to power off an interface 2.

In a possible implementation, the smart sensing service module may set delayed sending time (duration such as 1 second) for the received unsubscription message, so that the unsubscription message may be sent to an AON ISP along a QMI after the delayed sending time is reached.

S902: A camera driver 1 obtains, from the smart sensing service module, a message used to indicate to power off an AON camera.

For example, the camera driver 1 may send, to a MISC device management module, the message used to indicate to power off the AON camera, and the MISC device management module may send, based on a node 1, the message used to indicate to power off the AON camera to the camera driver 1.

S903: The camera driver 1 determines the interface 1 required to power off the AON camera.

For a meaning of the interface 1, reference may be made to the description in S603.

In a possible implementation, when the interface 1 includes an IOVDD interface, an AVDD interface, a DVDD interface, a RESET interface, and an MCLK interface, the electronic device may also complete power-off of all interfaces in the AON camera based on steps shown in S903-S906.

S904: A PMIC driver obtains, from the camera driver 1, a message used to indicate to power off the interface 1.

The message used to indicate to power off the interface 1 may include the interface 1, a power-off sequence of the interface 1, a power-off time interval of the interface 1, and the like.

For example, the camera driver 1 may send the message used to indicate to power off the interface 1 to a regulator framework, and the regulator framework powers off the interface 1 by using the PMIC driver. A process in which the electronic device performs power-off based on the regulator framework and the PMIC driver is similar to the power-on process described in S604, and details are not described herein again.

S905: The PMIC driver powers off the interface 1.

S906: The smart sensing service module obtains a response message 5 from the PMIC driver.

The response message 5 is used to indicate that power-off of the interface 1 in the AON camera is completed. For example, when determining that power-off of the interface 1 is completed, the PMIC driver may return the response message 5 to the smart sensing service module via the camera driver 1 and the MISC device management module.

S907: The AON ISP obtains the unsubscription message from the smart sensing service module.

The unsubscription message may include an identifier of the AON service. For example, when the smart sensing service module receives the response message 5, the smart sensing service module may initiate the unsubscription message, and send the unsubscription message to the AON ISP via the QMI. After receiving the unsubscription message, the AON ISP may perform S908-S910.

S908: In response to the unsubscription message, the AON ISP determines, from a configuration file 1, the interface 2 required to power off the AON camera.

S909: The AON ISP powers off the interface 2.

S910: When power-off of the interface 2 is completed, the AON ISP unsubscribes from the AON service.

It may be understood that, that the AON ISP unsubscribes from the AON service is equivalent to destroying a channel between the smart sensing service module, the QMI, and the AON ISP.

S911: The smart sensing service module obtains a response message 6 from the AON ISP.

The response message 6 is used to indicate that unsubscription of the AON service is completed.

With reference to the description in FIG. 6A, FIG. 6B, and FIG. 6C and FIG. 9, similarly, power-off duration of the AON camera at the startup detection stage is less than power-off duration of the AON camera at the AON service disabling stage.

Scenario 2: An electronic device performs, on a sensor hub side, power supply management on an AON camera by using a first PMIC.

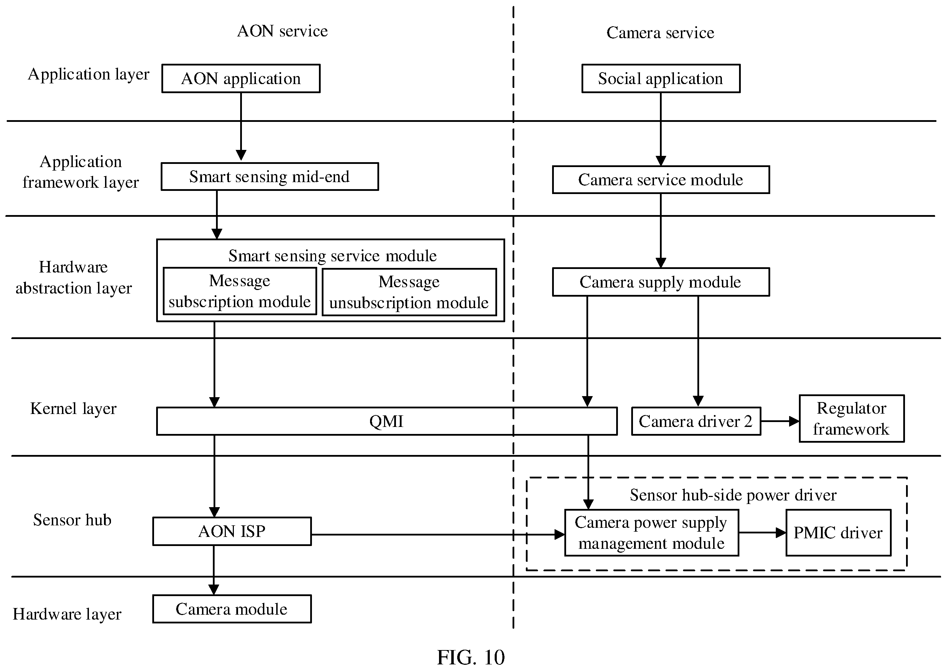

FIG. 10 is a schematic diagram of a software architecture for performing power supply management on a sensor hub side according to an embodiment of this application. In the embodiment corresponding to FIG. 10, an electronic device may include one or more of the following: a social application, an AON application, a smart sensing mid-end, a camera service module, a camera supply module, a smart sensing service module, a QMI, a camera driver 2, an AON ISP, a regulator framework, a camera supply management module, or a PMIC driver. The smart sensing service module includes a message subscription module and a message unsubscription module.

The camera power supply management module and the PMIC driver may be disposed in a sensor hub-side power driver on a sensor hub side, and the sensor hub-side power driver is configured to perform power management on an AON camera on the sensor hub side.

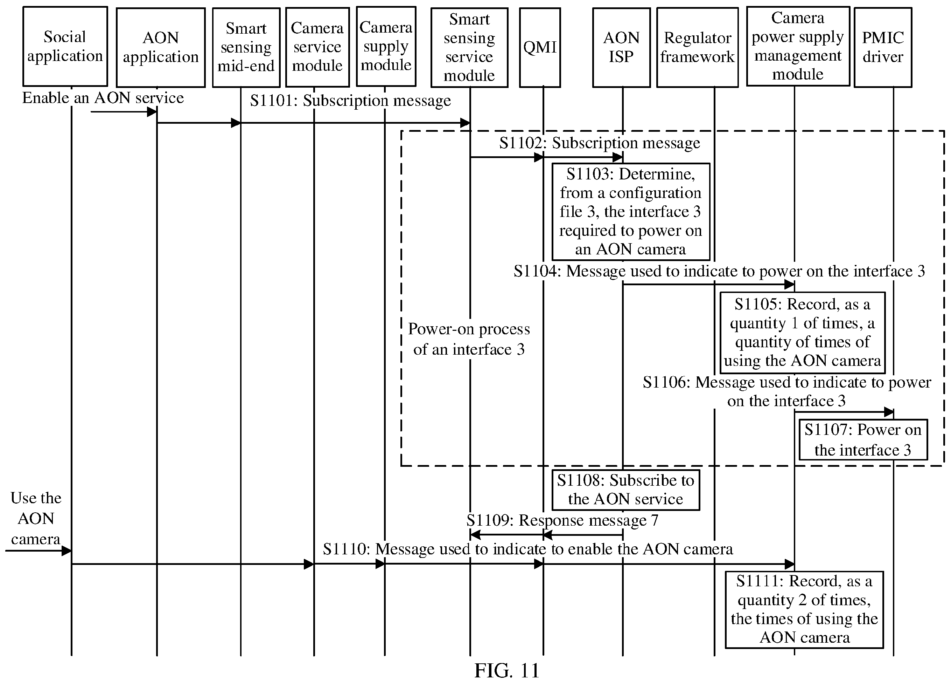

For example, after the smart sensing service module senses that an AON service is enabled, the smart sensing service module may send a subscription message to the AON ISP along the QMI. The AON ISP may obtain all interfaces (for example, an interface 3) required to power on the AON camera, and further indicate the sensor hub-side power driver to power on all the interfaces. For a specific power-on process, reference may be made to the description in FIG. 11.

In a possible implementation, the camera power supply management module may manage a quantity of times of using the AON camera. After the sensor hub-side power driver powers on the interface 3, the camera power supply management module may record, as a quantity 1 of times, the quantity of times of using the AON camera (which is alternatively understood as that a quantity of times of using a service of the AON camera is the quantity 1 of times). When the electronic device detects that a user uses the AON camera in another application (for example, the social application), the social application may indicate, along the camera service module, the camera supply module, and the QMI, the camera power supply management to use the AON camera, and the camera power supply management module may record, as a quantity 2 of times, the quantity of times of using the AON camera (which is alternatively understood as that the quantity of times of using the service of the AON camera is the quantity 2 of times). In this way, the quantity of times of using the AON camera is recorded, so that the following case can be avoided: the AON camera is powered off when the electronic device disables the AON service, which consequently makes another application unable to use the AON camera. For a specific conflict scenario for disabling the AON service, reference may be made to the description in FIG. 13A and FIG. 13B.

In a possible implementation, when the electronic device detects an operation that the user performs a video call by using a rear-facing camera in the social application, the social application may also indicate, along the camera service module and the camera supply module, the camera driver 2 to supply power to the rear-facing camera, so that the camera driver 2 indicates the regulator framework to supply power to the rear-facing camera.

Based on the software architecture described in FIG. 10, the electronic device may power on the AON camera when the AON service is enabled (refer to the description in FIG. 11), or may power off the AON camera when the AON service is disabled (refer to the description in FIG. 13A and FIG. 13B).

For example, FIG. 11 is a schematic diagram of interaction between modules in another control method for an electronic device according to an embodiment of this application. For a module included in FIG. 11, reference may be made to the description in FIG. 10. Details are not described herein again.

As shown in FIG. 11, the control method for an electronic device may include the following steps.

S1101: In response to an operation performed by a user to enable an AON service, a smart sensing service module obtains a subscription message from an AON application.

S1102: An AON ISP obtains the subscription message from the smart sensing service module.

S1103: The AON ISP determines, from a configuration file 3, an interface 3 required to power on an AON camera.

Content included in the configuration file 3 may be the same as the content included in the configuration file 2. Refer to the description in S703. Details are not described herein again.

S1104: A camera power supply management module obtains, from the AON ISP, a message used to indicate to power on the interface 3.

S1105: The camera power supply management module records, as a quantity 1 of times, a quantity of times of using the AON camera.

A value of the quantity 1 of times may be 1. If the quantity 1 of times is 1, it may be understood as that the quantity of times of using the AON camera is 1, or it is understood as that one service is currently using the AON camera.

S1106: A PMIC driver obtains, from the camera power supply management module, the message used to indicate to power on the interface 3.

S1107: The PMIC driver powers on the interfaces 3.

S1108: The AON ISP subscribes to the AON service.

S1109: The smart sensing service module obtains a response message 7 from the AON ISP.

The response message 7 is used to indicate that subscription to the AON service is completed.

After S1109, the electronic device may also detect image information based on the steps shown in S612-S615 and generate an AON instruction based on the image information. A specific process is not described herein.

S1110: In response to an operation of using the AON camera, the camera power supply management module obtains, from a social application, a message used to indicate to enable the AON camera.

If the social application is used as an example, the operation of using the AON camera may be: an operation of performing a video call by using the AON camera, an operation that the user performs photographing by using the AON camera, or the like.

For example, in response to the operation of using the AON camera, the social application may send a message used to enable the AON camera to the camera power supply management module along the camera service module, the camera supply module, and a QMI.

In a possible implementation, when the camera supply module detects the message used to indicate to enable the AON camera, the camera supply module may power on the AON camera by using a camera driver 2 and a regulator framework. Because the AON camera is currently in a powered-on state, the electronic device does not need to perform a power-on process again.

S1111: The camera power supply management module records, as a quantity 2 of times, the quantity of times of using the AON camera.

A value of the quantity 2 of times may be 2. If the quantity 2 of times is 2, it may be understood as that the quantity of times of using the AON camera is 2, or it is understood as that two services are currently using the AON camera.

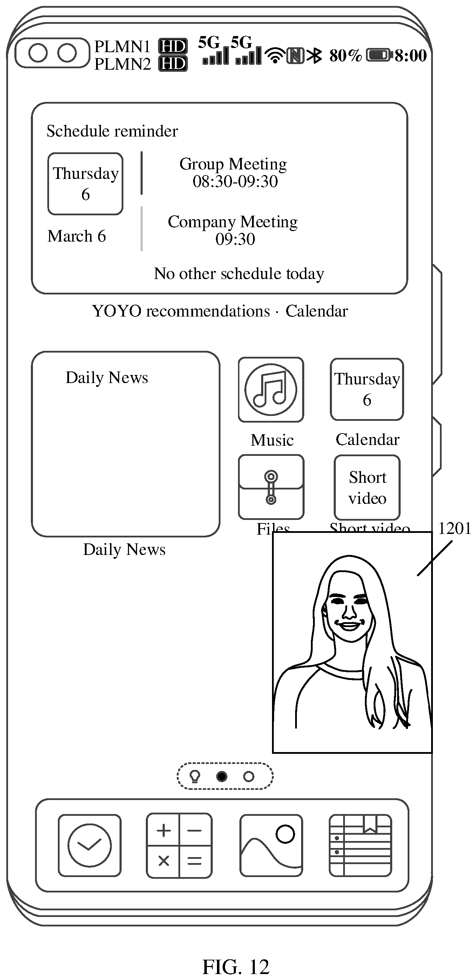

After S1111, the electronic device may capture a real-time image based on the AON camera and display the real-time image in the social application. For example, FIG. 12 is a schematic diagram of an interface for using an AON camera according to an embodiment of this application. In a scenario in which a user uses the AON camera to perform a video call, an electronic device may display an interface shown in FIG. 12. The interface may include a window 1201, and the window 1201 may include video content obtained based on the AON camera.

It may be understood that the AON camera may be a device that supports time division multiplexing. For example, when the electronic device needs to use the AON camera to perform a video call, the electronic device may display, in the interface, an image captured in real time by the AON camera. Alternatively, when the electronic device needs to use the AON camera to execute an AON service, the electronic device may perform image recognition on image information captured by the AON camera, and generate an AON instruction.

In a possible implementation, the AON camera may also support at least two AON services at the same time. For example, in a process in which the electronic device records a video based on the AON camera, the electronic device controls, by using an air gesture, the AON camera to end recording and the like. Alternatively, in a process in which the electronic device performs a video call based on the AON camera, another interface or the like is viewed by using an air gesture.

Similarly, in the scenario shown in FIG. 11, an interface of the AON camera is managed on a sensor hub side. Therefore, a sensor hub may also determine, based on sensor data, that when the AON camera is to sleep, a message used to indicate to cause the AON to enter a sleep state is sent to an AON ISP, and the AON ISP may power off an interface 3 to reduce power consumption.

It may be understood that the sensor hub may implement power management on the AON camera, and because the sensor hub may process data sent by each sensor, more intelligent power supply management can be performed on the AON camera based on the sensor data.

Based on the embodiment corresponding to FIG. 11, when the electronic device disables the AON service, the electronic device may determine, based on a case of using the AON camera, whether to power off the AON camera.

For example, FIG. 13A and FIG. 13B are a schematic diagram of interaction between modules in another power-off method according to an embodiment of this application. In the embodiment corresponding to FIG. 13A and FIG. 13B, S1301-S1305 may be a conflict scenario for disabling an AON camera, and S1311-S1319 may be a normal scenario in which the AON camera is disabled.

The conflict scenario for disabling the AON camera may include the following steps:
S1301: In response to an operation of disabling an AON service, a smart sensing service module obtains, from an AON application, a message used to indicate to disable the AON service.
S1302: An AON ISP obtains, from the smart sensing service module, a message used to indicate to power off the AON camera.
S1303: The AON ISP determines an interface 3 required to power off the AON camera.
S1304: A camera supply management module obtains, from the AON ISP, a message used to indicate to power off the interface 3.
S1305: The camera supply management module records, as a quantity 1 of times, a quantity of times of using the AON camera, and determines not to power off the AON camera.

It may be understood that, when receiving a power-on instruction or a power-off instruction, the camera supply management module may separately record the quantity of times of using the AON camera. For example, when receiving the power-on instruction, the camera supply management module may record the quantity of times of using the AON camera plus 1, or when receiving the power-off instruction, the camera supply management module may record the quantity of times of using the AON camera minus 1. In this way, a power-off process is performed when it is detected that the quantity of times of using the AON camera is 0.

For example, in response to the message used to indicate to power of the interface 3, the camera supply management module may record the quantity of times of using the AON camera minus 1, that is, a current quantity of times of using the AON camera is a quantity 1 of times. If a value of the quantity 1 of times is greater than a first threshold, the camera supply management module determines not to power off the AON, to ensure normal use of the AON camera in a social application. The first threshold may be a value such as 0.

In a possible implementation, after S1305, when the electronic device detects that a user disables a camera service (for example, ends a video call), the electronic device may record, as a quantity 3 of times, the quantity of times of using the AON camera, and power off the AON camera. If the quantity 3 of times is 0, it may be understood as that the quantity of times of using the AON camera is 0, or it is understood as that no service is currently using the AON camera.

The normal scenario for disabling the AON camera may include the following steps:
S1311: A camera power supply management module obtains, from a social application, a message used to indicate to disable the camera.
S1312: The camera power supply management module records, as a quantity 1 of times, a quantity of times of using the AON camera, and determines not to power off the AON camera.
S1313: In response to an operation of disabling the AON service, a smart sensing service module obtains, from an AON application, a message used to indicate to disable an AON service.
S1314: An AON ISP obtains, from the smart sensing service module, a message used to indicate to power off the AON camera.
S1315: The AON ISP determines an interface 3 required to power off the AON camera.
S1316: The camera supply management module obtains, from the AON ISP, a message used to indicate to power off the interface 3.

For a specific process in S1313-S1316, reference may be made to the description in S1301-S1304. Details are not described herein again.

S1317: The camera power supply management module records, as a quantity 3 of times, the quantity of times of using the AON camera, and determines to power off the AON camera.

A value of the quantity 3 of times may be 0. It may be understood that, when the quantity of times of using the AON camera is 0, the camera power supply management module may determine that no service is using the AON camera, and therefore, perform a step shown in S1318.

S1318: A PMIC driver obtains, from the camera power supply management module, the message used to indicate to power off the interface 3.

S1319: The PMIC driver powers off the interface 3.

Based on this, the electronic device may record the quantity of times of using the AON camera, and power off the AON camera when determining that no service is using the AON camera, thereby reducing a case in which another service cannot use the AON camera because the AON camera is powered off in advance.

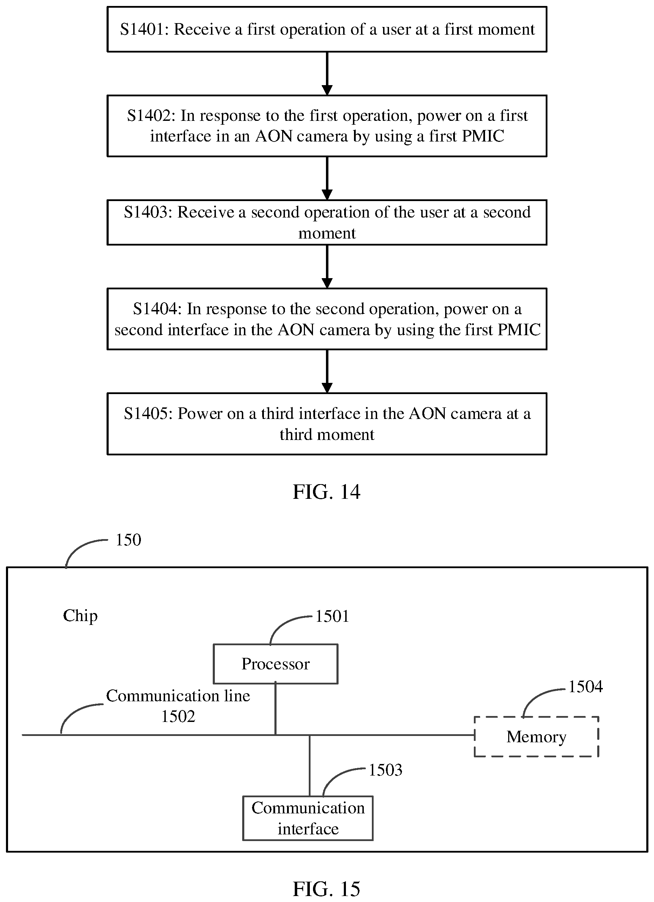

With reference to the description in FIG. 5 - FIG. 13A and FIG. 13B of the embodiments of this application, FIG. 14 is a schematic flowchart of a control method for an electronic device according to an embodiment of this application.

As shown in FIG. 14, the control method is applied to an electronic device, and the electronic device includes an always-on AON camera and a first power management integrated circuit PMIC. The control method may include the following steps.

S1401: Receive a first operation of a user at a first moment.

The first operation is a startup operation, for example, a device startup operation described in S701.

S1402: In response to the first operation, power on a first interface in the AON camera by using the first PMIC.

The first interface may be the interface 3 described in the embodiments of this application. For the description of the interface 3, reference may be made to FIG. 7.

S1403: Receive a second operation of the user at a second moment.

The second operation is an operation of enabling an AON service, as described in S601.

S1404: In response to the second operation, power on a second interface in the AON camera by using the first PMIC.

The second moment is after the first moment.

The second interface may be the interface 1 described in the embodiments of this application. For the description of the interface 1, reference may be made to FIG. 6A, FIG. 6B, and FIG. 6C.

S1405: Power on a third interface in the AON camera at a third moment.

The third moment is after the second moment, and the first interface includes the second interface and the third interface.

The third interface may be the interface 2 described in the embodiments of this application. For the description of the interface 2, reference may be made to FIG. 6A, FIG. 6B, and FIG. 6C.

In this way, this embodiment of this application provides a control method for an electronic device. The first PMIC may be used instead of a specific power management chip to supply power to the AON camera, so that applicability of performing power management on the AON camera is improved, and costs are reduced. In addition, in this solution, flexible power management may be performed on the AON camera based on an actual requirement for the AON service. For example, the electronic device may separately power on the second interface and the third interface when enabling the AON service.

In a possible implementation, power-on duration of the first interface is first duration, power-on of the third interface is completed at a fourth moment, the fourth moment is after the third moment, duration between the second moment and the fourth moment is second duration, and the second duration is longer than the first duration.

The first duration may be the duration 1 described in the embodiments of this application, and the second duration may be the duration 2 described in the embodiments of this application.

It may be understood that, compared with power-on duration of the first interface at a power-on stage, when the electronic device separately supplies power to the second interface and the third interface, a case in which power supply time for separate power supply is prolonged may exist.

In a possible implementation, the powering on a second interface in the AON camera by using the first PMIC includes: on an application processor AP side, powering on the second interface by using the first PMIC, where the second interface is a power interface in the AON camera; and the powering on a third interface in the AON camera includes: on a sensor hub sensor hub side, powering on the third interface, where the third interface is an interface configured to perform signal control on the AON camera.

In this way, on the AP side, the electronic device supplies power to the second interface in the AON camera by using the first PMIC, so that a power supply process is not affected by a specific power management chip, and applicability of this solution is improved. In addition, on the sensor hub side, power is supplied to the third interface in the AON camera, so that a sensor hub can perform low-power-consumption control on the AON camera by using the third interface.

In a possible implementation, the electronic device includes an AON application, a smart sensing service module, and a first camera driver, and after the responding to the second operation, the method further includes: The AON application sends a subscription message to the smart sensing service module, where the subscription message is used to subscribe to the AON service; and the smart sensing service module sends a first message to the first camera driver in response to the subscription message, where the first message is used to indicate to power on the AON camera.

The first camera driver may be the camera driver 1 described in the embodiments of this application.

For the description of the subscription message, reference may be made to FIG. 6A, FIG. 6B, and FIG. 6C. The first message may be the message, in S602, used to indicate to power on the AON camera.

In this way, when detecting the subscription message, the smart sensing service module in the electronic device may indicate, by using the first message, the first camera driver to supply power to the AON camera in a timely manner, thereby reducing an exception situation of the AON service.

In a possible implementation, the AP side of the electronic device includes the first camera driver, a regulator framework, and the first PMIC driver; the powering on the second interface by using the first PMIC includes: the first camera driver obtains the second interface from a device tree in response to the first message; the first camera driver sends a second message to the first PMIC driver along the regulator framework; and the first PMIC driver powers on the second interface in response to the second message; and the method further includes: when power-on of the second interface is completed, the first PMIC driver sends a first response message to the smart sensing service module along the first camera driver.

The first camera driver may be the camera driver 1 described in FIG. 6A, FIG. 6B, and FIG. 6C, and the second message may be the message, in S604, used to indicate to power on the interface 1. The first response message may be the response message 1 in S606.

It may be understood that the first camera driver, the regulator framework, and the first PMIC driver that are located on the AP side can jointly implement power-on of the second interface. The regulator framework and the first PMIC driver may be disposed in an AP power driver.

In a possible implementation, the sensor hub side includes an AON image signal processor ISP; and the method further includes: the smart sensing service module sends the subscription message to the AON ISP in response to the first response message; and the AON ISP obtains the third interface from a first configuration file in response to the subscription message; and the powering on the third interface includes: the AON ISP powers on the third interface.

It may be understood that the electronic device may alternatively power on some interfaces on the sensor hub side. Because the first PMIC driver is not limited to any specific power management chip, a power supply management process may be flexibly set based on a service requirement.

In a possible implementation, the AON ISP receives a third message when the sensor hub detects that the electronic device is in a sleep state, where the third message includes a message used to indicate to cause the AON camera to enter the sleep state; and the AON ISP powers off the third interface in response to the third message.

The third message may be the message, in S616, for causing the AON to enter the sleep state.

It may be understood that the sensor hub may obtain and calculate sensor data. Therefore, when the sensor hub detects, based on the sensor data, that the sensor hub needs to sleep, the sensor hub may send the third message to the AON ISP, so that the AON ISP may power off an interface 2 to reduce power consumption.

In a possible implementation, before the second moment, the method further includes: powering off the first interface at a fifth moment by using the first PMIC; and after the third moment, the method further includes: receiving a third operation of the user at a sixth moment, where the third operation is an operation of disabling the AON service; in response to the third operation, powering off the second interface by using the first PMIC; and powering off the third interface at a seventh moment, where the seventh moment is after the sixth moment.

For the third operation, reference may be made to the description of S901.

In this way, in this solution, flexible power management may be performed on the AON camera based on an actual requirement for the AON service. For example, the electronic device may separately power off the second interface and the third interface when disabling the AON service.

In a possible implementation, power-off duration of the first interface is third duration, power-off of the third interface is completed at an eighth moment, the eighth moment is after the seventh moment, duration between the sixth moment and the eighth moment is fourth duration, and the fourth duration is longer than the third duration.

It may be understood that, compared with power-off duration of the first interface at a power-on stage, when the electronic device separately powers off the second interface and the third interface, a case in which power-off time in separate power-off is prolonged may exist.

In a possible implementation, the second interface includes one or more of the following: an input/output voltage IOVDD interface, a digital voltage DVDD interface, or an analog voltage AVDD interface, and the third interface includes a reset signal RESET interface and/or a master clock signal MCLK interface.

An embodiment of this application provides another control method for an electronic device, which is applied to the electronic device, where the electronic device includes an AON camera and a first PMIC, and the method includes: receiving a second operation of a user, where the second operation is an operation of enabling an AON service; in response to the second operation, recording, as a first parameter, a quantity of times of using the AON camera, and powering on a first interface in the AON camera by using the first PMIC; receiving a fourth operation of the user, where the fourth operation includes an operation of using the AON camera in a first service, the first service is different from the AON service, and the fourth operation is performed after the second operation; and in response to the fourth operation, recording, as a second parameter, the quantity of times of using the AON camera.

The fourth operation may be the operation described in S1110. The first parameter may be the quantity 1 of times described in S1105, and the second parameter may be the quantity 2 of times described in S1111.

It may be understood that because the AON camera may indicate at least two AON services at the same time, the electronic device may provide a solution in which the AON camera is used by a plurality of services. For example, the electronic device may determine, by recording the quantity of times of using the AON camera, whether to disable the AON camera when disabling the AON service.

In a possible implementation, after power-on of the first interface is completed, the method further includes: receiving a fifth operation of the user, where the fifth operation is an operation of disabling the AON service, and the fifth operation is performed after the fourth operation; and in response to the fifth operation, recording, as the first parameter, the quantity of times of using the AON camera, and not powering off the first interface when the first parameter is not equal to a first threshold.

The fifth operation may be the operation described in S1301.

Refer to the description of S1301-S1305. Because the first service is using the AON camera in this case, the electronic device cannot power off the AON camera when disabling the AON service.

In a possible implementation, after power-on of the first interface is completed, the method further includes: receiving a sixth operation of the user, where the sixth operation is an operation of disabling the first service, and the sixth operation is performed after the fourth operation; in response to the sixth operation, recording, as the first parameter, the quantity of times of using the AON camera, and not powering off the first interface when the second parameter is not equal to a first threshold; receiving a seventh operation of the user, where the seventh operation is an operation of disabling the AON service, and the seventh operation is performed after the sixth operation; and in response to the seventh operation, recording, as a third parameter, the quantity of times of using the AON camera, and powering off the first interface when the third parameter is equal to the first threshold.

The sixth operation may be the operation described in S1311. The seventh operation may be the description in S1313. The third parameter may be the quantity 3 of times described in S1317.

Refer to the description of S1311-S1319. When the electronic device disables the first service before disabling the AON service, the electronic device may determine, based on the third parameter, that currently only the AON service is using the AON camera, and therefore may directly power off the AON camera.

In a possible implementation, a sensor hub of the electronic device includes an AON ISP, a camera power supply management module, and a second PMIC driver, and the recording, as a first parameter, a quantity of times of using the AON camera, and powering on a first interface in the AON camera by using the first PMIC includes: the AON ISP obtains the first interface from a second configuration file; the AON ISP sends a fourth message to the second PMIC driver along the camera power supply management module; in response to the fourth message, the camera power supply management module records, as the first parameter, the quantity of times of using the AON camera; and the second PMIC driver powers on the first interface in response to the fourth message.

The second PMIC driver may be a PMIC driver in the sensor hub.

It may be understood that the electronic device may control power-on of the first interface on the sensor hub side. In addition, the camera power supply management module is added on the sensor hub side, so that the sensor hub can record the quantity of times of using the AON camera, and maintain a conflict scenario in which the AON camera is used by a plurality of services.

In a possible implementation, the first interface includes one or more of the following: an input/output voltage IOVDD interface, a digital voltage DVDD interface, an analog voltage AVDD interface, a reset signal RESET interface, or a master clock signal MCLK interface.

It should be noted that a sequence relationship between the steps described in the embodiments of this application is merely an example, and cannot constitute a limitation on the embodiments of this application.

It should be noted that all module names involved in the embodiments of this application may be defined as other names, provided that functions of the modules can be implemented. The module names are not specifically limited.

It should be noted that user information (including but not limited to user equipment information, personal information of a user, and the like) and data (including but not limited to data used for analysis, stored data, presented data, and the like) involved in the embodiments of this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

The control method for an electronic device in the embodiments of this application is described above. A control apparatus for an electronic device provided in the embodiments of this application is described below. A person skilled in the art may understand that the method and the apparatus may be combined and mutual reference may be made, and that a related apparatus provided in an embodiment of this application may perform the steps in the foregoing list ranking method.

It may be understood that to implement the foregoing functions, implementing the control apparatus for an electronic device includes executing a hardware structure and/or software module corresponding to each function. A person skilled in the art should be easily aware that the example method steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that such an implementation goes beyond the scope of this application.

In the embodiments of this application, the control apparatus for an electronic device may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that division into modules in the embodiments of this application is an example, and is merely logical function division. During actual implementation, there may be another division manner.

FIG. 15 is a schematic diagram of a structure of a chip according to an embodiment of this application. A chip 150 includes one or more than two (including two) processors 1501, a communication line 1502, a communication interface 1503, and a memory 1504.

In some implementations, the memory 1504 stores the following elements: an executable module or a data structure, or a subset thereof, or an extended set thereof.

The foregoing method described in the embodiments of this application may be applied to the processor 1501, or implemented by the processor 1501. The processor 1501 may be an integrated circuit chip with a signal processing capability. In an implementation process, the steps of the foregoing method may be completed by using a hardware-integrated logic circuit in the processor 1501 or instructions in a form of software. The processor 1501 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 1501 may implement or perform the processing-related methods, steps, and logical block diagrams disclosed in the embodiments of this application.

The steps of the method disclosed with reference to the embodiments of this application may be directly performed by a hardware decoding processor, or performed by a combination of hardware in a decoding processor and a software module. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the memory 1504, and the processor 1501 reads information in the memory 1504 and completes the steps of the foregoing method in combination with hardware in the processor.

The processor 1501, the memory 1504, and the communication interface 1503 may communicate with each other through the communication line 1502.

**In** the foregoing embodiments, instructions stored in the storage for execution by the processor may be implemented in a form of a computer program product. The computer program product may be written into the storage in advance, or may be downloaded and installed in the storage in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium accessible by the computer, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

## Claims

1. A control method for an electronic device, applied to the electronic device, wherein the electronic device comprises an always-on AON camera and a first power management integrated circuit PMIC, and the method comprises:
receiving a first operation of a user at a first moment, wherein the first operation is a startup operation;
in response to the first operation, powering on a first interface in the AON camera by using the first PMIC;
receiving a second operation of the user at a second moment, wherein the second operation is an operation of enabling an AON service;
in response to the second operation, powering on a second interface in the AON camera by using the first PMIC, wherein the second moment is after the first moment; and
powering on a third interface in the AON camera at a third moment, wherein the third moment is after the second moment, and the first interface comprises the second interface and the third interface.

2. The method according to claim 1, wherein power-on duration of the first interface is first duration, power-on of the third interface is completed at a fourth moment, the fourth moment is after the third moment, duration between the second moment and the fourth moment is second duration, and the second duration is longer than the first duration.

3. The method according to claim 1 or 2, wherein
the powering on a second interface in the AON camera by using the first PMIC comprises: on an application processor AP side, powering on the second interface by using the first PMIC, wherein the second interface is a power interface in the AON camera; and
the powering on a third interface in the AON camera comprises: on a sensor hub sensor hub side, powering on the third interface, wherein the third interface is an interface configured to perform signal control on the AON camera.

4. The method according to claim 3, wherein the electronic device comprises an AON application, a smart sensing service module, and a first camera driver, and after the responding to the second operation, the method further comprises:
sending, by the AON application, a subscription message to the smart sensing service module, wherein the subscription message is used to subscribe to the AON service; and
sending, by the smart sensing service module, a first message to the first camera driver in response to the subscription message, wherein the first message is used to indicate to power on the AON camera.

5. The method according to claim 4, wherein the AP side of the electronic device comprises the first camera driver, a regulator framework, and the first PMIC driver;
the powering on the second interface by using the first PMIC comprises:
obtaining, by the first camera driver, the second interface from a device tree in response to the first message;
sending, by the first camera driver, a second message to the first PMIC driver along the regulator framework; and
powering on, by the first PMIC driver, the second interface in response to the second message; and
the method further comprises: when power-on of the second interface is completed, sending, by the first PMIC driver, a first response message to the smart sensing service module along the first camera driver.

6. The method according to claim 5, wherein the sensor hub side comprises an AON image signal processor ISP;
the method further comprises: sending, by the smart sensing service module, the subscription message to the AON ISP in response to the first response message; and
obtaining, by the AON ISP, the third interface from a first configuration file in response to the subscription message; and
the powering on the third interface comprises: powering on, by the AON ISP, the third interface.

7. The method according to claim 6, wherein the method further comprises:
receiving, by the AON ISP, a third message when the sensor hub detects that the electronic device is in a sleep state, wherein the third message comprises a message used to indicate to cause the AON camera to enter the sleep state; and
powering off, by the AON ISP, the third interface in response to the third message.

8. The method according to any one of claims 1-7, wherein
before the second moment, the method further comprises: powering off the first interface at a fifth moment by using the first PMIC; and
after the third moment, the method further comprises: receiving a third operation of the user at a sixth moment, wherein the third operation is an operation of disabling the AON service;
in response to the third operation, powering off the second interface by using the first PMIC; and
powering off the third interface at a seventh moment, wherein the seventh moment is after the sixth moment.

9. The method according to claim 8, wherein power-off duration of the first interface is third duration, power-off of the third interface is completed at an eighth moment, the eighth moment is after the seventh moment, duration between the sixth moment and the eighth moment is fourth duration, and the fourth duration is longer than the third duration.

10. The method according to any one of claims 1-9, wherein the second interface comprises one or more of the following: an input/output voltage IOVDD interface, a digital voltage DVDD interface, or an analog voltage AVDD interface, and the third interface comprises a reset signal RESET interface and/or a master clock signal MCLK interface.

11. A control method for an electronic device, applied to the electronic device, wherein the electronic device comprises an AON camera and a first PMIC, and the method comprises:
receiving a second operation of a user, wherein the second operation is an operation of enabling an AON service;
in response to the second operation, recording, as a first parameter, a quantity of times of using the AON camera, and powering on a first interface in the AON camera by using the first PMIC;
receiving a fourth operation of the user, wherein the fourth operation comprises an operation of using the AON camera in a first service, the first service is different from the AON service, and the fourth operation is performed after the second operation; and
in response to the fourth operation, recording, as a second parameter, the quantity of times of using the AON camera.

12. The method according to claim 11, wherein after power-on of the first interface is completed, the method further comprises:
receiving a fifth operation of the user, wherein the fifth operation is an operation of disabling the AON service, and the fifth operation is performed after the fourth operation; and
in response to the fifth operation, recording, as the first parameter, the quantity of times of using the AON camera, and skipping powering off the first interface when the first parameter is not equal to a first threshold.

13. The method according to claim 11, wherein after power-on of the first interface is completed, the method further comprises:
receiving a sixth operation of the user, wherein the sixth operation is an operation of disabling the first service, and the sixth operation is performed after the fourth operation;
in response to the sixth operation, recording, as the first parameter, the quantity of times of using the AON camera, and skipping powering off the first interface when the second parameter is not equal to a first threshold;
receiving a seventh operation of the user, wherein the seventh operation is an operation of disabling the AON service, and the seventh operation is performed after the sixth operation; and
in response to the seventh operation, recording, as a third parameter, the quantity of times of using the AON camera, and powering off the first interface when the third parameter is equal to the first threshold.

14. The method according to any one of claims 11-13, wherein a sensor hub of the electronic device comprises an AON ISP, a camera power supply management module, and a second PMIC driver, and the recording, as a first parameter, a quantity of times of using the AON camera, and powering on a first interface in the AON camera by using the first PMIC comprises:
obtaining, by the AON ISP, the first interface from a second configuration file;
sending, by the AON ISP, a fourth message to the second PMIC driver along the camera power supply management module;
in response to the fourth message, recording, as the first parameter by the camera power supply management module, the quantity of times of using the AON camera; and
powering on, by the second PMIC driver, the first interface in response to the fourth message.

15. The method according to any one of claims 1-14, wherein the first interface comprises one or more of the following: an input/output voltage IOVDD interface, a digital voltage DVDD interface, an analog voltage AVDD interface, a reset signal RESET interface, or a master clock signal MCLK interface.

16. An electronic device, wherein the electronic device comprises one or more processors and a memory; and
the memory is coupled to the one or more processors, the memory is configured to store computer program code, the computer program code comprises computer instructions, and the one or more processors invoke the computer instructions to enable the electronic device to perform the method according to any one of claims 1 to 10 or the method according to any one of claims 11 to 15.

17. A chip system, wherein the chip system is applied to an electronic device, the chip system comprises one or more processors, and the one or more processors are configured to invoke computer instructions to enable the electronic device to perform the method according to any one of claims 1 to 10 or the method according to any one of claims 11 to 15.

18. A computer-readable storage medium, wherein the computer-readable storage medium comprises computer instructions, and when the computer instructions are run on an electronic device, the electronic device is enabled to perform the method according to any one of claims 1 to 10 or the method according to any one of claims 11 to 15.

19. A computer program product, wherein the computer program product comprises computer program code, and when the computer program code is run on an electronic device, the electronic device is enabled to perform the method according to any one of claims 1 to 10 or the method according to any one of claims 11 to 15.
